# EUROPEAN PATENT APPLICATION

(11) **EP 4 517 870 A1**
(43) Date of publication of application: **05.03.2025**
(21) Application number: 22961794.9
(22) Date of filing: 14.10.2022
(51) Int. Cl.: H01M 4/36, H01M 4/38

(54) **NEGATIVE ELECTRODE ACTIVE MATERIAL AND PREPARATION METHOD THEREFOR, AND SECONDARY BATTERY AND ELECTRICAL DEVICE CONTAINING NEGATIVE ELECTRODE ACTIVE MATERIAL**

(71) Applicant: Contemporary Amperex Technology (Hong Kong) Limited, Central, Central And Western District (HK)
(72) Inventor: WU, Kai, Ningde City, Fujian 352100 (CN); WANG, Jiazheng, Ningde City, Fujian 352100 (CN); LV, Zijian, Ningde City, Fujian 352100 (CN); DONG, Xiaobin, Ningde City, Fujian 352100 (CN)
(74) Representative: Kraus & Lederer PartGmbB
(86) International application number: PCT/CN2022/125432
(87) International publication number: WO 2024/077607

(57) **Abstract**

The present application provides a negative electrode active material, a method for preparing the same, a secondary battery and an electrical device comprising the same, wherein the negative electrode active material comprises a carbon matrix and a filling material, wherein the carbon matrix has a graphitization degree of less than or equal to 87%, the carbon matrix comprises a plurality of pore structures, at least a portion of the filling material is located in the pore structures of the carbon matrix, and the filling material comprises one or more of elements capable of alloying reaction with Li. The negative electrode active material provided by the present application can have high energy density, high initial coulombic efficiency, low volume expansion, high conductivity and good cycle stability at the same time.

## Description

### TECHNICAL FIELD

The present application belongs to the field of battery technology, and in particular relates to a negative electrode active material and a method for preparing the same, as well as a secondary battery and an electrical device comprising the same.

### BACKGROUND

In recent years, secondary batteries have been widely used in energy storage power systems such as hydropower, thermal power, wind power, and solar power plants, as well as in electric tools, electric bicycles, electric motorcycles, electric vehicles, military equipment, aerospace, and other fields. In the process of rapid development of secondary batteries, higher requirements have been put forward for their energy density. Carbon-based materials, represented by graphite, are the most commonly used negative electrode active materials for secondary batteries, but their capacity has almost reached the theoretical specific capacity. Non-carbon materials, such as silicon-based materials, tin-based materials, and germanium-based materials, have attracted widespread attention due to their high theoretical specific capacity. However, these negative electrode active materials have common defects such as large volume expansion, low initial coulombic efficiency, and/or poor conductivity

### SUMMARY

An object of the present application is to provide a negative electrode active material and a method for preparing the same, as well as a secondary battery and an electrical device comprising the same, wherein the negative electrode active material has high capacity, high initial coulombic efficiency, low volume expansion, high conductivity, and good cycle stability.

A first aspect of the present application provides a negative electrode active material comprising a carbon matrix and a filling material, wherein the carbon matrix has a graphitization degree of less than or equal to 87%, the carbon matrix comprises multiple pore structures, at least a portion of the filling material is located within the pore structures of the carbon matrix, and the filling material comprises one or more elements capable of alloying with Li.

The inventors of the present application have found that by setting the filling material with high specific capacity advantages within the pore structures of a carbon matrix with a low graphitization degree (greater than 0 and less than or equal to 87%), the resulting negative electrode active material can have high specific capacity, high initial coulombic efficiency, low volume expansion, high conductivity, and good cycle stability. Moreover, it can also make the secondary battery have high energy density, high initial coulombic efficiency, and long cycle life. The carbon matrix of the present application, with a graphitization degree of less than or equal to 87%, has the advantages of high conductivity and high initial coulombic efficiency compared to carbon matrices obtained through pore-forming agents, and has the advantages of low volume expansion and high cycle stability compared to natural graphite. Therefore, the negative electrode active material provided by the present application can fully utilize the high specific capacity advantage of the filling material and also compensate for the defects of poor conductivity and low initial coulombic efficiency of the filling material; in addition, at least a portion of the filling material being located within the pore structures of the carbon matrix can further reduce the volume expansion of the filling material through the carbon matrix.

In some embodiments of the present application, the carbon matrix has a graphitization degree of 65%-87%. This is advantageous for the negative electrode active material to better balance high specific capacity, high initial coulombic efficiency, low volume expansion, high conductivity, and good cycle stability.

In some embodiments of the present application, the elements capable of alloying with Li include one or more of silicon, tin, and germanium elements. This is advantageous for the negative electrode active material to have an advantage of high specific capacity.

In some embodiments of the present application, the filling material includes one or more of silicon-based materials, tin-based materials, and germanium-based materials.

In some embodiments of the present application, the silicon-based materials include one or more of elemental silicon, silicon oxides, silicon-carbon materials, silicon-nitride compounds, and silicon alloys.

In some embodiments of the present application, the tin-based materials include one or more of elemental tin, tin oxides, tin sulfides, tin phosphides, tin composite oxides, tin-carbon materials, and tin alloys.

In some embodiments of the present application, the germanium-based materials include one or more of elemental germanium, germanium oxides, germanium-carbon materials, germanium alloys, and germanates.

In some embodiments of the present application, the filling material includes crystalline and/or amorphous filling materials, optionally crystalline silicon-based materials and/or amorphous silicon-based materials. Silicon-based materials have the advantage of high specific capacity, which is beneficial for increasing the energy density of secondary batteries.

In some embodiments of the present application, the crystalline filling material has a grain size of ≤100nm, optionally 2nm-50nm. When the crystalline filling material has an appropriate grain size, it can enhance the initial coulombic efficiency of the secondary battery while avoiding significant adverse effects on the cycle performance and storage performance of the secondary battery.

In some embodiments of the present application, the filling material includes one or more of silicon-based materials, tin-based materials, and germanium-based materials deposited by vapor phase, optionally including vapor-phase deposited silicon-based materials.

In some embodiments of the present application, in the X-ray diffraction spectrum measured by an X-ray diffractometer, the negative electrode active material includes a (002) crystal plane peak at 26.4° and a (111) crystal plane peak at 28.6°, and the ratio of the full width at half maximum of the (002) crystal plane peak to the full width at half maximum of the (111) crystal plane peak is 0.2-50, optionally 0.2-20. By controlling the full width at half maximum of the (002) and (111) crystal plane peaks within an appropriate range, the carbon matrix can have an appropriate graphitization degree, and the filling material can have an appropriate grain size, which is beneficial for the negative electrode active material to have high specific capacity, high initial coulombic efficiency, low volume expansion, high conductivity, and good cycle stability.

In some embodiments of the present application, at least a portion of the filling material is located within the pore structures of the carbon matrix, and there are gaps between the filling material and the carbon matrix. When there are gaps between the filling material and the carbon matrix, these pores can serve as space to accommodate the volume expansion of the filling material, thereby buffering the stress generated during the expansion process of the filling material, which can further reduce the probability of particle breakage and pulverization.

In some embodiments of the present application, the negative electrode active material further includes a coating layer, which is located on at least a portion of the surface of the carbon matrix. The coating layer can prevent direct contact between the filling material and the electrolytic solution, thereby reducing side reactions of the electrolytic solution, decreasing the consumption of active ions, and improving the cycle performance of the secondary battery. It can also enhance the stability of the negative electrode slurry, preventing the filling material from reacting with solvents such as water, which could increase the difficulty of processing the negative electrode slurry. Additionally, the coating layer can also play a role in buffering the volume expansion of the filling material, thereby improving the structural stability of the negative electrode active material and enhancing the electrochemical performance of the secondary battery.

In some embodiments of the present application, the coating layer includes one or more of carbon materials, conductive polymers, metal oxides, and metal sulfides, optionally carbon materials.

In some embodiments of the present application, the coating layer has a thickness of ≤100nm, optionally 10nm-100nm. When the thickness of the coating layer is within the aforementioned range, the integrity of the coating layer is higher, and it can more effectively prevent the filling material from coming into contact with the electrolytic solution, thereby reducing side reactions of electrolytic solution and allowing the negative electrode active material to have high specific capacity, high initial coulombic efficiency, and low volume expansion.

In some embodiments of the present application, the negative electrode active material includes carbon element and elements capable of alloying with Li.

In some embodiments of the present application, a mass percentage of carbon element in the negative electrode active material is 20wt%-80wt%, optionally 30wt%-70wt%.

In some embodiments of the present application, a mass percentage of the elements capable of alloying with Li in the negative electrode active material is 20wt%-80wt%, optionally 30wt%-70wt%.

When the content of carbon element and/or elements capable of alloying with Li in the negative electrode active material is within the aforementioned range, it is beneficial for the negative electrode active material to have high specific capacity and high conductivity.

In some embodiments of the present application, the negative electrode active material further includes other elements, which include one or more of oxygen, metal elements, and nitrogen.

In some embodiments of the present application, the total mass percentage of other elements in the negative electrode active material is less than or equal to 20wt%, optionally less than or equal to 10wt%.

In some embodiments of the present application, the carbon matrix has an initial coulombic efficiency of ≥75%, optionally 75%-87%. This is advantageous for improving the initial coulombic efficiency of the negative electrode active material.

In some embodiments of the present application, the carbon matrix has a powder resistivity under a pressure of 16MPa of ≤5×10⁻²Ω•cm, optionally ≤3.5×10⁻²Ω•cm. This is advantageous for improving the conductivity of the negative electrode active material.

In some embodiments of the present application, the carbon matrix has a BET specific surface area of 50m²/g-1000m²/g, optionally 100m²/g-700m²/g. This is advantageous for the negative electrode active material to have an appropriate BET specific surface area, which can reduce the surface activity of the negative electrode active material, reduce interface side reactions, lower SEI film formation consumption, and thereby improve the initial coulombic efficiency and cycle performance of the secondary battery.

In some embodiments of the present application, the negative electrode active material has a graphitization degree of ≥65%, optionally 65%-87%. This is advantageous for the negative electrode active material to better balance high initial coulombic efficiency, high conductivity, and good cycle stability.

In some embodiments of the present application, the negative electrode active material has an initial coulombic efficiency of ≥92%, optionally 92%-95%. This can reduce the irreversible consumption of active ions and improve the capacity utilization characteristics and cycle performance of the secondary battery.

In some embodiments of the present application, the negative electrode active material has a volume particle size Dv50 of 3µm-50µm, optionally 5µm-20µm.

In some embodiments of the present application, the negative electrode active material has a volume particle size Dv90 of ≤60µm, optionally 20µm-50µm.

In some embodiments of the present application, the negative electrode active material has a particle size distribution (Dv90-Dv10)/Dv50 of 1.0-3.0, optionally 1.0-2.0.

When at least one of the volume particle size Dv50, the volume particle size Dv90, or the particle size distribution (Dv90-Dv10)/Dv50 of the negative electrode active material is within the aforementioned range, it helps to reduce the surface activity of the negative electrode active material, decrease interface side reactions, lower the SEI film formation consumption, and is beneficial for improving the transport performance of active ions and electrons, thereby further enhancing the cycle performance of the secondary battery.

In some embodiments of the present application, the negative electrode active material has a BET specific surface area of 2m²/g-100m²/g, optionally 2m²/g-30m²/g. When the BET specific surface area of the negative electrode active material is within the aforementioned range, it helps to reduce surface activity, decrease interface side reactions, lower the SEI film formation consumption, thereby improving the initial coulombic efficiency and cycle performance of the secondary battery.

In some embodiments of the present application, the negative electrode active material has a powder resistivity under a pressure of 16MPa of ≤5×10⁻¹Ω•cm, optionally ≤2×10⁻¹Ω•cm. Thus, the negative electrode active material has good conductivity, which is beneficial for improving the cycle performance and rate performance of the secondary battery.

A second aspect of this application provides a method for preparing a negative electrode active material, including the following steps: Step 1, providing a carbon matrix including multiple pore structures and with a graphitization degree of less than or equal to 87%, optionally 65%-87%; Step 2, dispersing a filling material into the pore structures of the carbon matrix to obtain the negative electrode active material, wherein the negative electrode active material includes the carbon matrix and the filling material, the carbon matrix includes multiple pore structures, and at least a portion of the filling material is located within the pore structures of the carbon matrix, and the filling material includes one or more elements capable of alloying with Li, optionally one or more of silicon, tin, and germanium elements.

In some embodiments of the present application, in Step 1, the carbon matrix is prepared by placing a carbon source with multiple pore structures in a high-temperature furnace and subjecting it to graphitization treatment under a protective gas atmosphere at 1600°C-2400°C, and the carbon matrix is obtained after the treatment. This allows for the production of a carbon matrix including multiple pore structures and with a graphitization degree of less than or equal to 87%, optionally 65%-87%.

In some embodiments of the present application, the holding time for the graphitization treatment is 1h-12h.

In some embodiments of the present application, the carbon source includes one or more of hard carbon, petroleum coke, pitch coke, biomass carbon, and resin carbon.

By graphitizing the carbon source with multiple pore structures at a certain temperature, it can reduce the micropores in the carbon source, improve the uniformity of the subsequent filling material dispersion, and remove the residual bonds on the surface of the carbon source, reduce the content of oxygen-containing functional groups in the carbon source, and decrease electrolytic solution's side reactions, thereby improving the initial coulombic efficiency, conductivity, and high-temperature performance of the obtained carbon matrix, and enabling the secondary battery to have good cycle performance.

In some embodiments of the present application, in Step 1, the carbon matrix has an initial coulombic efficiency of ≥75%, optionally 75%-87%.

In some embodiments of the present application, in Step 1, the carbon matrix has a powder resistivity under a pressure of 16MPa of ≤5×10⁻²Ω•cm, optionally ≤3.5×10⁻²Ω•cm.

In some embodiments of the present application, in Step 1, the carbon matrix has a BET specific surface area of 50m²/g-1000m²/g, optionally 100m²/g-700m²/g.

In some embodiments of the present application, in Step 1, the carbon matrix has a volume particle size Dv50 of 3µm-50µm, optionally 5µm-20µm.

In some embodiments of the present application, in Step 2, the process for dispersing the filling material into the pore structures of the carbon matrix includes liquid-phase deposition and vapor-phase deposition processes, optionally vapor-phase deposition. Compared to the liquid-phase deposition process, the vapor-phase deposition process is advantageous for better depositing and uniformly dispersing the filling material in the pore structures of the carbon matrix, and can avoid the problem of agglomeration of the filling material and/or excessive deposition on the surface of the carbon matrix. Furthermore, the vapor-phase deposition process is more mature and can be easily scaled up for industrial production.

In some embodiments of the present application, the vapor-phase deposition process includes chemical vapor deposition and physical vapor deposition processes, optionally chemical vapor deposition process.

In some embodiments of the present application, in Step 2, the step of dispersing the filling material into the pore structures of the carbon matrix include the following steps: placing the carbon matrix in a reaction furnace, introducing a first mixed gas containing a source of an element capable of alloying with Li, and depositing at a first temperature T₁ for a first time t₁, thereby obtaining the negative electrode active material.

In some embodiments of the present application, the first mixed gas includes the source of the element capable of alloying with Li and a protective gas, optionally, a volume percentage of the source of the element capable of alloying with Li in the first mixed gas is 10%-50%.

In some embodiments of the present application, the first mixed gas further includes a carbon source gas.

In some embodiments of the present application, the volume ratio of the source of the element capable of alloying with Li to the carbon source gas in the first mixed gas is greater than or equal to 0.5:1, optionally (2-10):1.

In some embodiments of the present application, a volume percentage of the carbon source gas in the first mixed gas is ≤20%, optionally 5%-20%.

In some embodiments of the present application, the pressure inside the reaction furnace is 200Pa-600Pa higher than atmospheric pressure.

In some embodiments of the present application, a total gas flow rate of the first mixed gas is 0.5L/min-20L/min.

In some embodiments of the present application, the first temperature T₁ is 400°C-1000°C.

In some embodiments of the present application, the first time t₁ is 1h-12h.

By adjusting at least one of the composition of the first mixed gas, the total gas flow rate of the first mixed gas, the first temperature, and the first time t₁ within the aforementioned ranges, it is advantageous for depositing the filling material in the pore structures of the carbon matrix, and it is also advantageous for adjusting the crystallinity and/or grain size of the filling material within a suitable range.

In some embodiments of the present application, the method further includes Step 3: forming a coating layer on at least a portion of the surface of the negative electrode active material obtained in Step 2, the coating layer including one or more of carbon materials, conductive polymers, metal oxides, and metal sulfides.

In some embodiments of the present application, the step of forming the coating layer includes the following steps: placing the negative electrode active material obtained in Step 2 in a reaction furnace, introducing a second mixed gas containing a carbon source gas, and depositing at a second temperature T₂ for a second time t₂, thereby obtaining a carbon-coated negative electrode active material.

In some embodiments of the present application, the second mixed gas includes a carbon source gas and a protective gas, optionally, a volume percentage V₂ of the carbon source gas in the second mixed gas is 5%-50%.

In some embodiments of the present application, a total gas flow rate of the second mixed gas is 0.5L/min-20L/min.

In some embodiments of the present application, the second temperature T₂ is 700°C-850°C.

In some embodiments of the present application, the second time t₂ is 1h-6h.

In Step 3, by adjusting at least one the composition of the second mixed gas, the total gas flow rate of the second mixed gas, the second temperature, and the second time t₂ within the aforementioned ranges, it is advantageous for forming a coating layer with an appropriate thickness, avoiding the coating layer being too thick and reducing the specific capacity of the negative electrode active material.

A third aspect of this application provides a secondary battery, including a negative electrode plate, wherein the negative electrode plate includes the negative electrode active material of the first aspect of the present application or the negative electrode active material prepared by the method of the second aspect of the present application.

A fourth aspect of this application provides an electrical device, including the secondary battery of the third aspect of the present application.

The inventors of this application have found in their research that by placing the filling material with high capacity advantage in the pore structure of the carbon matrix with low graphitization degree, the obtained negative electrode active material can have high capacity, high initial coulombic efficiency, low volume expansion, high conductivity, and good cycle stability. Moreover, the secondary battery can also have high energy density, high initial coulombic efficiency, and long cycle life. The electrical device of the present application includes the secondary battery provided by the present application, thereby possessing at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
Fig. 1 is a schematic diagram of a battery cell according to an embodiment of the present application.
Fig. 2 is a schematic exploded diagram of a battery cell according to an embodiment of the present application.
Fig. 3 is a schematic diagram of a battery module according to an embodiment of the present application.
Fig. 4 is a schematic diagram of a battery pack according to an embodiment of the present application.
Fig. 5 is a schematic exploded diagram of the embodiment of the battery pack as shown in Fig. 4.
Fig. 6 is a schematic diagram of an embodiment of an electrical device of the present application as a powder supply.

In the drawings, the drawings are not necessarily drawn to scale. The reference numerals are defined as follows: 1. Battery pack; 2. Upper box body; 3. Lower box body; 4. Battery module; 5. Secondary battery; 51. Casing; 52. Electrode assembly; 53. Cover plate e.

### DETAILED DESCRIPTION

Hereafter, embodiments of the negative electrode active material and method for preparing the same, secondary battery and electrical device comprising same according to the present application will be specifically described in detail with appropriate references to the accompanying drawings. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise/comprising", "include/including", and "contain/containing" mentioned in the present application mean that it is drafted in an open-ended mode, or it may also mean a close-ended mode. For example, the transition phases "comprise/comprising", "include/including", and "contain/containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

The terms "first", "second" and the like in the present application are used to distinguish different objects, rather than to describe a specific sequence or primary-subordinate relationship, unless otherwise clearly specified.

In the present application, the terms "plurality", "a plurality of" and "multiple" and "several" refer to two or more.

Unless otherwise specified, the terms used in the present application have the well-known meanings generally understood by those skilled in the art.

Unless otherwise specified, a numerical value for each parameter mentioned in the present application can be determined by various test methods commonly used in the art, for example, can be determined according to the test methods given in the Examples of the present application.

To meet the higher demands for energy density in secondary batteries, non-carbon materials such as silicon-based, tin-based, and germanium-based materials have garnered widespread attention due to their high theoretical specific capacities. Silicon has a theoretical specific capacity of up to 4200 mAh/g, tin has a theoretical specific capacity of up to 994 mAh/g, and germanium has a theoretical specific capacity of up to 1600 mAh/g, which can significantly increase the energy density of secondary batteries.

However, unlike the energy storage mechanism of graphite, non-carbon materials such as silicon-based, tin-based, and germanium-based materials store energy by forming alloys with metals (such as lithium, sodium, etc.) through alloying reactions. This leads to significant volume effect during the charging and discharging process, which can easily cause particle breakage and pulverization. Consequently, the negative electrode film layer experiences pulverization issues, which can result in a loss of electrical contact with the current collector, making the process of active ion intercalation and deintercalation not proceed smoothly, significantly increasing the irreversible capacity. Furthermore, such significant volume effects can also lead to the repeated breakdown and reconstruction of the solid electrolyte interphase (SEI) film on the surface of the negative electrode active material particles, further increasing the irreversible consumption of active ions, ultimately affecting the capacity of the secondary battery. Additionally, as the charging and discharging process progresses, the SEI film on the surface of the negative electrode active material particles becomes thicker, leading to an increase in the resistance of the secondary battery. Furthermore, the unstable SEI film on the surface of the negative electrode active material particles also makes them directly contact with the electrolytic solution, leading to further interface side reactions and irreversible capacity.

Therefore, when used as negative electrode active materials, these non-carbon materials usually have defects such as high irreversible capacity, low initial coulombic efficiency, and significant volume expansion, resulting in a large actual capacity loss and poor cycle life of the secondary battery. Moreover, silicon is a semiconductor material with a low intrinsic conductivity and poor conductivity, further deteriorating the electrochemical performance of the secondary battery.

**In** view of this, the inventors of this application have proposed a new type of negative electrode active material through extensive research, which can balance high specific capacity, high initial coulombic efficiency, low volume expansion, high conductivity, and good cycle stability. This material can also enable secondary batteries to have high energy density, high initial coulombic efficiency, and long cycle life.

### Negative electrode active material

The first aspect of embodiments of the present application provides a negative electrode active material. The negative electrode active material comprises a carbon matrix and a filling material, wherein the carbon matrix has a graphitization degree of less than or equal to 87%, the carbon matrix comprises multiple pore structures, at least a portion of the filling material is located within the pore structures of the carbon matrix, and the filling material comprises one or more elements capable of alloying with Li.

The filling material comprises one or more elements capable of alloying with Li, thereby contributing to a higher capacity and compensating for the low capacity of the carbon matrix. However, it has serious volume effects, which can affect the performance of the electrochemical properties.

In the research on existing technology, in order to overcome the defect of large volume expansion of the filling material, the current method is to set it through deposition and other processes in a carbon matrix with multiple pores or natural graphite. However, the carbon matrices with multiple pores currently used are mostly obtained by pore-forming agents, such as etching with an alkaline solution, and the carbon matrix itself is non-graphitized carbon (or amorphous carbon), thereby having defects such as high irreversible capacity, low initial coulombic efficiency, and poor conductivity. On the other hand, natural graphite itself has pore structures, which can also serve as a substrate material for deposition and has the advantage of excellent conductivity. However, the irregular pore structure of natural graphite leads to poor dispersion uniformity of the filling material, in addition, natural graphite also has defects such as poor structural stability, large volume expansion, and poor cycle performance.

Therefore, the methods currently used in existing technology cannot enable the obtained negative electrode active material to have high specific capacity, high initial coulombic efficiency, low volume expansion, high conductivity, and good cycle stability.

The inventors of the present application have discovered through research that by setting the filling material with high specific capacity advantage in the pore structure of the carbon matrix with low graphitization degree (greater than 0 and less than or equal to 87%), the resulting negative electrode active material can have high specific capacity, high initial coulombic efficiency, low volume expansion, high conductivity, and good cycle stability. Furthermore, the secondary battery can also have high energy density, high initial coulombic efficiency, and long cycle life. The graphitization degree of the carbon matrix in the present application is less than or equal to 87%, which has the advantage of high conductivity and high initial coulombic efficiency compared to the carbon matrix obtained by pore-forming agents, and has the advantage of small volume expansion and high cycle stability compared to natural graphite. Therefore, the negative electrode active material provided by the present application can fully utilize the high specific capacity advantage of the filling material and also compensate for the defects of poor conductivity and low initial coulombic efficiency of the filling material; in addition, at least a portion of the filling material is located within the pore structures of the carbon matrix, thereby reducing the volume expansion of the filling material through the carbon matrix.

In the present application, the graphitization degree of the carbon matrix is less than or equal to 87%, for example, it can be less than or equal to 85%, less than or equal to 80%, less than or equal to 75%, less than or equal to 70%. When the graphitization degree of the carbon matrix is greater than 87%, the carbon matrix has large volume expansion and poor structural stability during charging and discharging process, which can affect the cycle stability and cycle life of the negative electrode active material. As the graphitization degree of the carbon matrix decreases, its structural stability improves, which is beneficial for improving the cycle stability of the negative electrode active material and extending the cycle life of the secondary battery.

The inventors of the present application have further noticed in their research that the graphitization degree of the carbon matrix should not be excessively low, as its initial coulombic efficiency and conductivity are poor, which can make the improvement effect on the initial coulombic efficiency and conductivity of the negative electrode active material less noticeable. For example, the graphitization degree of the carbon matrix may be greater than or equal to 10%, greater than or equal to 20%, greater than or equal to 30%, greater than or equal to 40%, greater than or equal to 45%, greater than or equal to 50%, greater than or equal to 55%, greater than or equal to 60%, or greater than or equal to 65%.

In some embodiments, the graphitization degree of the carbon matrix can be 40%-87%, 50%-87%, 60%-87%, 65%-87%, 65%-85%, 65%-82%, or 65%-80%. This range of graphitization degrees is advantageous for the negative electrode active material to better balance high specific capacity, high initial coulombic efficiency, low volume expansion, high conductivity, and good cycle stability.

In some embodiments, at least a portion of the filling material is located within the pore structures of the carbon matrix, and there is a gap between the filling material and the carbon matrix. When there is a gap between the filling material and the carbon matrix, this portion of the pore can serve as space to accommodate the volume expansion of the filling material, thereby buffering the stress generated during the expansion of the filling material and further reducing the probability of particle breakage and pulverization.

In some embodiments, the element capable of alloying with Li can optionally include one or more of silicon, tin, and germanium elements. This is advantageous for the negative electrode active material to have an advantage of high specific capacity.

In some embodiments, the filling material can comprise one or more of silicon-based materials, tin-based materials, and germanium-based materials, optionally silicon-based materials.

In the present application, the term "silicon-based material" refers to a compound containing silicon elements. In some embodiments, the silicon-based material can include one or more of elemental silicon, silicon oxides, silicon-carbon materials, silicon-nitrogen compounds, and silicon alloys.

In the present application, the term "tin-based material" refers to a compound containing tin elements. In some embodiments, the tin-based material can include one or more of elemental tin, tin oxides, tin sulfides, tin phosphides, tin composite oxides, tin-carbon materials, and tin alloy materials. Tin composite oxides refer to tin oxides that introduce some glass-phase metal and/or non-metal oxides.

In the present application, the term "germanium-based material" refers to a compound containing germanium elements. In some embodiments, the germanium-based material can include one or more of elemental germanium, germanium oxides, germanium-carbon materials, germanium alloy materials, and germanates.

In some embodiments, the filling material can include crystalline and/or amorphous filling materials.

In some embodiments, the filling material can include crystalline silicon-based materials and/or amorphous silicon-based materials. Silicon-based materials have the advantage of high specific capacity, which is beneficial for increasing the energy density of secondary batteries. Optionally, the filling material can include crystalline elemental silicon and/or amorphous elemental silicon.

In some embodiments, the crystalline filling material has a grain size of ≤100nm, for example, ≤80nm, ≤70nm, ≤60nm, ≤50nm, ≤40nm, ≤30nm, ≤20nm. Optionally, the grain size of the crystalline filling material can be 2nm-50nm, 2nm-40nm, 2nm-30nm, or 2nm-20nm.

When the grain size of the crystalline filling material is larger, it is advantageous for improving the initial coulombic efficiency of the secondary battery, but it is detrimental to the cycle performance and storage performance of the secondary battery. Therefore, when the crystalline filling material has an appropriate grain size, it can enhance the initial coulombic efficiency of the secondary battery while avoiding significant adverse effects on the cycle performance and storage performance of the secondary battery.

The grain size of the crystalline filling material has a well-known meaning in the art and can be determined using instruments and methods known in the art. For example, it can be measured and quantified using a high-resolution transmission electron microscope (HRTEM).

In some embodiments, the filling material can be obtained by vapor phase deposition processes. For example, the filling material can include one or more of silicon-based materials, tin-based materials, and germanium-based materials deposited by vapor phase, optionally silicon-based materials, and more optionally, the filling material can include silicon deposited by vapor phase. The vapor-phase deposition process can include chemical vapor deposition and physical vapor deposition processes, optionally chemical vapor deposition process, such as thermal chemical vapor deposition, plasma-enhanced chemical vapor deposition, or microwave plasma-assisted chemical vapor deposition. Compared to liquid-phase deposition processes, vapor-phase deposition processes are advantageous for better depositing and uniformly dispersing the filling material in the pore structures of the carbon matrix, and can avoid agglomeration problems and/or excessive deposition on the surface of the carbon matrix. Furthermore, the vapor-phase deposition process is well-developed and can be easily scaled up for industrial production.

In some embodiments, in the X-ray diffraction spectrum measured by an X-ray diffractometer for the negative electrode active material, the negative electrode active material includes a (002) crystal plane peak at 26.4° and an (111) crystal plane peak at 28.6°, and the ratio of the full width at half maximum of the (002) crystal plane peak to the full width at half maximum of the (111) crystal plane peak is 0.2-50, for example, it can be 0.2, 0.5, 1, 2, 5, 10, 15, 20, 25, 30, 35, 40, 45, 50, or in the range consisting of any above value. Optionally, the ratio of the full width at half maximum of the (002) crystal plane peak to the full width at half maximum of the (111) crystal plane peak can be 0.2-20.

The full width at half maximum of the (002) crystal plane peak and the full width at half maximum of the (111) crystal plane peak can be calculated by using an X-ray diffractometer (such as the Bruker D8 Discover) to calculate the crystal cell parameters with reference to JIS K 0131-1996. The peak positions of C 002 and Si 111 for two parallel samples can be obtained using the centroid method, and the testing angle range can be 20°-80°.

The full width at half maximum of the (002) crystal plane peak can characterize the arrangement integrity of the (002) crystal plane in the carbon matrix, while the full width at half maximum of the (111) crystal plane peak can characterize the content of elemental silicon in the filling material and the grain size of elemental silicon. By controlling the ratio of the full width at half maximum of the (002) crystal plane peak to the full width at half maximum of the (111) crystal plane peak within an appropriate range, the carbon matrix can have an appropriate graphitization degree, and the filling material can have an appropriate grain size, which is beneficial for the negative electrode active material to have high specific capacity, high initial coulombic efficiency, low volume expansion, high conductivity, and good cycle stability.

In some embodiments, the negative electrode active material further includes a coating layer located on at least a portion of the surface of the carbon matrix. The coating layer can prevent direct contact between the filling material and the electrolytic solution, thereby reducing side reactions of the electrolytic solution, decreasing the consumption of active ions, and improving the cycle performance of the secondary battery. It can also enhance the stability of the negative electrode slurry, preventing the filling material from reacting with solvents such as water, which could increase the difficulty of processing the negative electrode slurry. Additionally, the coating layer can also play a role in buffering the volume expansion of the filling material, thereby improving the structural stability of the negative electrode active material and enhancing the electrochemical performance of the secondary battery.

**In** some embodiments, the coating layer can include one or more of carbon materials, conductive polymers, metal oxides, and metal sulfides.

**In** some embodiments, the carbon materials can include one or more of hard carbon, soft carbon, graphene, carbon fibers, and carbon nanotubes.

**In** some embodiments, the conductive polymers can include one or more of polyaniline, polypyrrole and polythiophene.

**In** some embodiments, the metal oxides can include one or more of iron oxide, zinc oxide, tin oxide, copper oxide, and titanium oxide.

**In** some embodiments, the metal sulfides can include one or more of tin sulfide, molybdenum sulfide, titanium sulfide, iron sulfide, and copper sulfide.

**In** some embodiments, the coating layer includes carbon materials. As a result, in addition to preventing direct contact between the filling material and the electrolytic solution and buffering the volume expansion of the filling material, the coating layer can also contribute to part of the capacity, thereby increasing the specific capacity of the negative electrode active material. Furthermore, when the coating layer includes carbon materials, it can also help improve the conductivity of the filling material, especially the conductivity of silicon-based materials, which is beneficial for improving the capacity utilization characteristics of the negative electrode active material.

**In** some embodiments, the coating layer has a thickness of ≤100nm, optionally 10nm-100nm. When the thickness of the coating layer is within this range, the coating layer has higher integrity and can effectively avoid direct contact between the filling material and the electrolytic solution, thereby reducing side reactions of the electrolytic solution and enabling the negative electrode active material to have high specific capacity, high initial coulombic efficiency, and low volume expansion. When the thickness of the coating layer exceeds 100nm, the coating layer has better integrity but increased brittleness, which makes it more prone to breakage and pulverization during repeated charging and discharging process; in addition, the specific capacity of the negative electrode active material decreases.

In some embodiments, the negative electrode active material includes carbon element and elements capable of alloying with Li.

In some embodiments, a mass percentage of carbon element in the negative electrode active material is 20wt%-80wt%, for example, it can be 20wt%, 25wt%, 30wt%, 35wt%, 40wt%, 45wt%, 50wt%, 55wt%, 60wt%, 65wt%, 70wt%, 75wt%, 80wt%, or in the range consisting of any above value. Optionally, the mass percentage of carbon element in the negative electrode active material can be 30wt%-70wt%. The distribution area of the carbon elements is not specifically limited and can be located in at least one of the carbon matrix, the filling material, and the coating layer.

In some embodiments, the mass percentage of the elements capable of alloying with Li in the negative electrode active material is 20wt%-80wt%, for example, it can be 20wt%, 25wt%, 30wt%, 35wt%, 40wt%, 45wt%, 50wt%, 55wt%, 60wt%, 65wt%, 70wt%, 75wt%, 80wt%, or in the range consisting of any above value. Optionally, the mass percentage of the elements capable of alloying with Li in the negative electrode active material can be 30wt%-70wt%. Optionally, the elements capable of alloying with Li include silicon.

When the content of carbon element and/or elements capable of alloying with Li in the negative electrode active material is within the above range, it is beneficial for the negative electrode active material to have high specific capacity and high conductivity.

In some embodiments, in addition to including carbon elements and elements capable of alloying with Li, the negative electrode active material further comprises other elements, which include one or more of oxygen, metal elements, and nitrogen elements. The distribution area of the other elements is not specifically limited and can be located in at least one of the coating layer, the filling material, and the carbon matrix.

In some embodiments, the sum of the mass percentages of the other elements in the negative electrode active material is less than or equal to 20wt%, more preferably less than or equal to 10wt%, and even more preferably less than or equal to 5wt%.

In some embodiments, the carbon matrix has an initial coulombic efficiency of ≥75%, optionally 75%-87%. This is advantageous for improving the initial coulombic efficiency of the negative electrode active material.

In some embodiments, the carbon matrix has a powder resistivity under a pressure of 16MPa of ≤5×10⁻²Ω•cm, optionally ≤3.5×10⁻²Ω•cm. This is advantageous for improving the conductivity of the negative electrode active material.

In some embodiments, the carbon matrix has a BET specific surface area of 50m²/g-1000m²/g, optionally 100m²/g-700m²/g. This is advantageous for the negative electrode active material to have an appropriate BET specific surface area, thereby reducing the surface activity of the negative electrode active material, reducing interface side reactions, and lowering the consumption of SEI film formation, which in turn can improve the initial coulombic efficiency and cycle performance of the secondary battery.

In some embodiments, the negative electrode active material has a graphitization degree of ≥65%, optionally 65%-87%. This is advantageous for the negative electrode active material to better balance high initial coulombic efficiency, high conductivity, and good cycle stability.

In some embodiments, the negative electrode active material has an initial coulombic efficiency of ≥92%, optionally 92%-95%. This can reduce the irreversible consumption of active ions and improve the capacity utilization characteristics and cycle performance of the secondary battery.

In some embodiments, the negative electrode active material has a volume particle size Dv50 of 3µm-50µm, optionally 5µm-20µm.

In some embodiments, the negative electrode active material has a volume particle size Dv90 of ≤60µm, optionally 20µm-50µm.

In some embodiments, the negative electrode active material has a particle size distribution (Dv90-Dv10)/Dv50 of 1.0-3.0, optionally 1.0-2.0.

When at least one of the volume particle size Dv50, the volume particle size Dv90, or the particle size distribution (Dv90-Dv10)/Dv50 of the negative electrode active material is within the aforementioned range, it helps to reduce the surface activity of the negative electrode active material, decrease interface side reactions, and lower the consumption of SEI film formation, as well as improve the transport performance of active ions and electrons, thereby further enhancing the cycle performance of the secondary battery.

In some embodiments, the negative electrode active material has a BET specific surface area of 2m²/g-100m²/g, optionally 2m²/g-30m²/g, 2m²/g-20m²/g. When the BET specific surface area of the negative electrode active material is within the aforementioned range, it helps to reduce surface activity, decrease interface side reactions, and lower the consumption of SEI film formation, thereby improving the initial coulombic efficiency and cycle performance of the secondary battery.

In some embodiments, the negative electrode active material has a powder resistivity under a pressure of 16MPa of ≤5×10⁻¹Ω•cm, optionally ≤2×10⁻¹Ω•cm. Thus, the negative electrode active material has good conductivity, which is beneficial for improving the cycle performance and rate performance of the secondary battery.

In the present application, the volume particle size Dv10, Dv50, and Dv90 of the materials (e.g., negative electrode active materials, carbon matrices, etc.) have well-known meaning in the art, and represent the corresponding particle size when the cumulative volume distribution percentage of the material reaches 10%, 50%, and 90%, respectively. These can be easily measured using instruments and methods known in the art. For example, they can be conveniently measured by using a laser particle size analyzer with reference to GB/T 19077-2016. The testing instrument may be a Mastersizer 3000 laser particle size analyzer from Malvern Instruments Co., Ltd., UK.

In the present application, the BET specific surface area of the materials (e.g., negative electrode active materials, carbon matrices, etc.) has well-known meaning in the art, and may be measured with well-known instruments and methods in the art. For example, a test method with analysis of specific surface area by nitrogen adsorption may be used for testing, referring to GB/T 19587-2017, and the specific surface area can be calculated by the BET (Brunauer Emmett Teller) method, wherein the test method with analysis of specific surface area by nitrogen adsorption may be carried out by using the TRISTAR II 3020 type specific surface area and porosity analyzer from Micromeritics in the United States.

In the present application, the powder resistivity of materials (e.g., negative electrode active materials, carbon matrices, etc.) is a term known in the art and can be determined using instruments and methods known in the art. For example, a certain amount of powder sample can be placed in the loading cup of a resistivity tester, a certain pressure can be applied, and then manual data collection can be performed to record the powder resistivity test results of the sample under different pressures. In the present application, the test pressure can be 16MPa.

In the present application, the graphitization degree of materials (e.g., negative electrode active materials, carbon matrices, etc.) is a term known in the art and can be determined using instruments and methods known in the art. For example, referring to JIS K 0131-1996, an X-ray diffractometer (such as the Bruker D8 Discover) can be used to obtain the interplanar spacing d₀₀₂ of the (002) crystal plane, and then the graphitization degree of the material can be calculated according to the formula g=(0.3440-d₀₀₂)/(0.3440-0.3354)×100%.

In the present application, the content of each element in the negative electrode active material can be determined using instruments and methods known in the art. For example, the carbon content can be tested according to GB/T 20123-2006/ISO 15350:2000, with the testing instrument being an HCS-140 type infrared carbon-sulfur analyzer. The silicon content can be tested according to GB/T 20975.5-2020. The tin content in the negative electrode active material can be tested according to GB/T 20975.10-2020. The germanium content can be tested according to GB/T 20127.6-2006.

### Method for preparation

The second aspect of the present application provides a method for preparing a negative electrode active material, which can prepare the negative electrode active material of the first aspect of this application.

The method includes the following steps: Step 1, providing a carbon matrix comprising multiple pore structures and with a graphitization degree of less than or equal to 87%, optionally 65%-87%; Step 2, dispersing a filling material into the pore structures of the carbon matrix to obtain the negative electrode active material, wherein the negative electrode active material comprising the carbon matrix and the filling material, the carbon matrix includes multiple pore structures, and at least a portion of the filling material is located within the pore structures of the carbon matrix, and the filling material includes one or more elements capable of alloying with Li, optionally one or more of silicon, tin, and germanium elements.

In some embodiments of the present application, in Step 1, the carbon matrix is prepared by placing a carbon source with multiple pore structures in a high-temperature furnace and subjecting it to graphitization treatment under a protective gas atmosphere at 1600°C-2400°C, and the carbon matrix is obtained after the treatment. For example, the graphitization can be performed at 1600°C, 1700°C, 1800°C, 1900°C, 2000°C, 2100°C, 2200°C, 2300°C, 2400°C, or in the range consisting of any above value. This allows for the production of a carbon matrix including multiple pore structures and with a graphitization degree of less than or equal to 87%, optionally 65%-87%.

When the graphitization temperature is too low, the obtained carbon matrix is still non-graphitized carbon (or amorphous carbon), which has high irreversible capacity, low initial coulombic efficiency, and poor conductivity, thereby affecting the initial coulombic efficiency and cycle performance of the secondary battery. When the graphitization temperature is too high, the obtained carbon matrix has large volume expansion and poor structural stability during charging and discharging process, which can affect the cycle stability of the negative electrode active material and the cycle performance of the secondary battery.

In some embodiments, the heating rate of the high-temperature furnace is less than 10°C/min, for example, less than 8°C/min, less than 5°C/min.

In some embodiments, the holding time for the graphitization treatment is 1h-12h, for example, it can be 1h, 2h, 3h, 4h, 5h, 6h, 7h, 8h, 9h, 10h, 11h, 12h, or in the range consisting of any above value.

In some embodiments, the carbon source includes one or more of hard carbon, petroleum coke, pitch coke, biomass carbon, and resin carbon.

In some embodiments, the high-temperature furnace is a graphitization furnace, such as a chamber graphitization furnace, an Acheson graphitization furnace, a continuous graphitization furnace, or an inner string graphitization furnace
In Step 1, the carbon source used for preparing the carbon matrix is of various types, has a large natural storage capacity, is inexpensive, and the preparation process is simple. The carbon source with multiple pore structures can be directly purchased from the market or prepared according to known methods in the art, for example, by pore-forming agents such as etching with an alkaline solution.

By graphitizing the carbon source with multiple pores at a certain temperature, on the one hand, it can reduce the micropores in the carbon source, improve the dispersion uniformity of the subsequent filling material, and on the other hand, it can remove the residual bonds on the surface of the carbon source, reduce the content of oxygen-containing functional groups in the carbon source, and reduce electrolytic solution's side reactions, thereby improving the initial coulombic efficiency, conductivity, and high-temperature performance of the obtained carbon matrix, and enabling the secondary battery to have good cycle performance.

In some embodiments, in Step 1, the initial coulombic efficiency of the carbon matrix is ≥75%, optionally 75%-87%.

In some embodiments, in Step 1, the carbon matrix has a powder resistivity under a pressure of 16MPa of ≤5×10⁻²Ω•cm, optionally ≤3.5×10⁻²Ω•cm.

In some embodiments, in Step 1, the carbon matrix has a BET specific surface area of 50m²/g-1000m²/g, optionally 100m²/g-700m²/g.

In some embodiments of the present application, in Step 1, the carbon matrix has a volume particle size Dv50 of 3µm-50µm, optionally 5µm-20µm.

In some embodiments, in Step 2, the process for dispersing the filling material into the pore structures of the carbon matrix includes liquid-phase deposition and vapor-phase deposition processes, optionally vapor-phase deposition. Compared to the liquid-phase deposition process, the vapor-phase deposition process is advantageous for better depositing and uniformly dispersing the filling material in the pore structures of the carbon matrix, and can avoid the problem of agglomeration of the filling material and/or excessive deposition on the surface of the carbon matrix. Furthermore, the vapor-phase deposition process is more mature and can be easily scaled up for industrial production.

In some embodiments, the vapor-phase deposition process includes chemical vapor deposition and physical vapor deposition processes, optionally chemical vapor deposition process, such as any of thermal chemical vapor deposition, plasma-enhanced chemical vapor deposition, and microwave plasma-assisted chemical vapor deposition.

In some embodiments, in Step 2, the step of dispersing the filling material into the pore structures of the carbon matrix include the following steps: placing the carbon matrix in a reaction furnace, introducing a first mixed gas containing a source of an element capable of alloying with Li, and depositing at a first temperature T₁ for a first time t₁, thereby obtaining the negative electrode active material.

In some embodiments, optionally, the first mixed gas includes the source of the element capable of alloying with Li and a protective gas.

In some embodiments, optionally, a volume percentage of the source of the element capable of alloying with Li in the first mixed gas is 10%-50%, for example, 10%, 15%, 20%, 25%, 30%, 35%, 40%, 45%, 50%, or in the range consisting of any above value.

In some embodiments, the first mixed gas further includes a carbon source gas.

In some embodiments, a volume ratio of the source of the element capable of alloying with Li to the carbon source gas in the first mixed gas is greater than or equal to 0.5:1, optionally (2-10): 1. When the volume ratio of the source of the element capable of alloying with Li to the carbon source gas is within this range, it is advantageous for the negative electrode active material to have a high specific capacity. When the volume ratio is too small, the carbon content in the obtained filling material is higher, and the content of the element capable of alloying with Li is lower, which in turn leads to a less pronounced effect on increasing the capacity of the negative electrode active material.

In some embodiments, optionally, a volume percentage of the carbon source gas in the first mixed gas is ≤20%, optionally 5%-20%. This is advantageous for the negative electrode active material to have high specific capacity and high conductivity.

In some embodiments, optionally,, the volume percentage of the protective gas in the first mixed gas may be 30%-90%, for example, 35%, 40%, 45%, 50%, 55%, 60%, 65%, 70%, 75%, 80%, 85%, 90%, or in the range consisting of any above value.

The total gas flow rate of the first mixed gas may be 0.5L/min-20L/min, for example, 1L/min, 2L/min, 3L/min, 4L/min, 5L/min, 6L/min, 7L/min, 8L/min, 9L/min, 10L/min, 12L/min, 14L/min, 16L/min, 18L/min, 20L/min, or in the range consisting of any above value.

The pressure inside the reaction furnace may be slightly positive, for example, 200Pa-600Pa higher than atmospheric pressure, which is advantageous for the deposition process to proceed smoothly.

The reaction furnace may include, but is not limited to, a deposition furnace, a rotary furnace, a tubular furnace, and a fluidized bed.

The first temperature T₁ may be 400°C-1000°C, for example, 400°C, 450°C, 500°C, 550°C, 600°C, 650°C, 700°C, 750°C, 800°C, 850°C, 900°C, 950°C, 1000°C, or in the range consisting of any above value.

The first time t₁ may be 1h-12h, for example, 1h, 2h, 3h, 4h, 5h, 6h, 7h, 8h, 9h, 10h, 11h, 12h, or in the range consisting of any above value.

In the vapor-phase deposition process, by adjusting at least one of the composition of the first mixed gas, the total gas flow rate of the first mixed gas, the first temperature, and the first time t₁ within the aforementioned ranges, it is advantageous for depositing the filling material in the pore structures of the carbon matrix, and it is also advantageous for adjusting the crystallinity and/or grain size of the filling material within a suitable range.

In some embodiments, the method further includes Step 3: forming a coating layer on at least a portion of the surface of the negative electrode active material obtained in Step 2, the coating layer comprising one or more of carbon materials, conductive polymers, metal oxides, and metal sulfides.

The method for forming a coating layer on at least a portion of the surface of the negative electrode active material obtained in step 2 is not limited to any specific method and can be chosen based on the composition of the coating layer, for example, by solid-phase coating, liquid-phase coating, or vapor-phase coating.

In some embodiments, the steps for forming the coating layer include the following steps: mixing the negative electrode active material obtained in step 2 with the coating material and then carbonizing the mixture. Optionally, the coating material may include pitch (e.g., coal pitch, petroleum pitch, etc.) and polymer materials. Optionally, the carbonization temperature may be 500°C-1000°C.

In some embodiments, the steps for forming the coating layer include the following steps: placing the negative electrode active material obtained in step 2 in a reaction furnace, introducing a second mixed gas containing a carbon source gas, and depositing at a second temperature T₂ for a second time t₂, thereby obtaining a carbon-coated negative electrode active material.

In some embodiments, the second mixed gas includes a carbon source gas and a protective gas, and the volume percentage V₂ of the carbon source gas in the second mixed gas may be 5%-50%, for example, 5%, 10%, 15%, 20%, 25%, 30%, 35%, 40%, 45%, 50%, or in the range consisting of any above value.

In some embodiments, the total gas flow rate of the second mixed gas may be 0.5L/min-20L/min, for example, 0.8L/min, 1L/min, 2L/min, 3L/min, 4L/min, 5L/min, 6L/min, 7L/min, 8L/min, 9L/min, 10L/min, 12L/min, 14L/min, 16L/min, 18L/min, 20L/min, or in the range consisting of any above value.

In some embodiments, the second temperature T₂ may be 700°C-850°C, for example, 700°C, 710°C, 720°C, 730°C, 740°C, 750°C, 760°C, 770°C, 780°C, 790°C, 800°C, 810°C, 820°C, 830°C, 840°C, 850°C, or in the range consisting of any above value.

In some embodiments, the second time t₂ may be 1h-6h, for example, 1h, 1.5h, 2h, 2.5h, 3h, 3.5h, 4h, 4.5h, 5h, 5.5h, 6h, or in the range consisting of any above value.

In Step 3, by adjusting at least one of the composition of the second mixed gas, the total gas flow rate of the second mixed gas, the second temperature, and the second time t₂ within the aforementioned ranges, it is advantageous for forming a coating layer with an appropriate thickness, avoiding a coating layer that is too thick and reduces the specific capacity of the negative electrode active material.

In the present application, the term "protective gas" includes one or more of nitrogen and rare gases, optionally, the rare gas may include one or more of argon, helium, and the like.

In the present application, the term "source of an element capable of alloying with Li" refers to a gas that can form the filling material of the present application, for example, it may include one or more of silicon source gas, tin source gas, and germanium source gas.

Silicon source gas refers to a gas capable of forming the silicon-based material of the present application. Optionally, the silicon source gas includes but is not limited to one or more of silane (H₄Si), ethylsilane (H₆Si₂), propylsilane (H₈Si₃), silicon tetrachloride (Cl₄Si), trichlorosilane (Cl₃HSi), dichlorosilane (Cl₂H₂Si), chlorosilane (ClH₃Si), silicon tetrafluoride (F₄Si), trifluorosilane (F₃HSi), difluorosilane (F₂H₂Si), fluorosilane (FH₃Si), hexachlorodisilane (Cl₆Si₂), pentachlorodisilane (Cl₅HSi₂), tetrachlorodisilane (Cl₄H₂Si₂, including 1,1,2,2-tetrachlorodisilane, 1,1,1,2-tetrachlorodisilane), trichlorodisilane (Cl₃H₃Si₂, including 1,1,2-trichlorodisilane, 1,1,1-trichlorodisilane), dichlorodisilane (Cl₂H₄Si₂, including 1,1-dichlorodisilane, 1,2-dichlorodisilane), monochlorodisilane (ClH₅Si₂), hexafluoride disilane (F₆Si₂), pentafluorodisilane (F₅HSi₂), 1,1,2,2-tetrafluorodisilane (F₄H₂Si₂), 1,1,1-trifluorodisilane (F₃H₃Si₂), difluorodisilane (F₂H₄Si₂, including 1,1-difluorodisilane, 1,2-difluorodisilane), monofluorodisilane (FH₅Si₂), methylsilane, ethylsilane, dimethylsilane, trimethylsilane, tetramethylsilane, methyldisilane, dimethyldisilane, trimethyldisilane, tetramethyldisilane, hexamethylsilane alkane, methyl trichlorosilane, methyl chlorosilane, chloroethyl silane, dichloro dimethylsilane and dichloro diethylsilane.

The term "tin source gas" refers to a gas that can form the tin-based material of the present application. Optionally, the tin source gas may include one or more of stannane (H₄Sn), Cl₄Sn, Cl₃HSn, Cl₂H₂Sn, ClH₃Sn, F₄Sn, F₃HSn, F₂H₂Sn, and FH₃Sn.

The term "germanium source gas" refers to a gas that can form the germanium-based material of the present application. Optionally, the germanium source gas may include one or more of germane (H₄Ge), Cl₄Ge, and F4Ge.

In the present application, "carbon source gas" refers to a gas capable of forming carbon materials. Optionally, the carbon source gas includes but is not limited to one or more of methane, ethane, propane, isopropane, butane, isobutane, ethylene, propylene, butene, acetylene, ethyl chloride, fluoroethane, difluoroethane, chloromethane, fluoromethane, difluoromethane, trifluoromethane, chloroethylene, fluoroethylene, difluoroethylene, methylamine, formaldehyde, benzene, toluene, xylene, styrene and phenol.

Unless otherwise specified, raw materials and the instruments used in the preparation method of the present application are commercially available.

### Secondary Battery

The third aspect of embodiments of the present application provides a secondary battery.

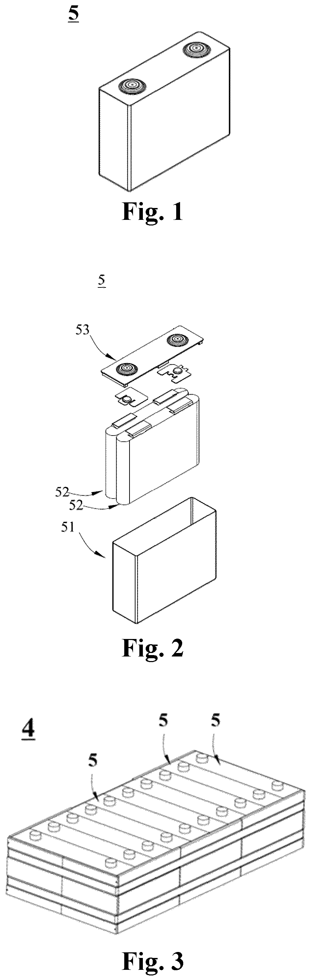

The secondary battery mentioned in the embodiments of the present application refers to a single physical module including one or more battery cells to provide higher voltage and capacity. For example, the secondary battery mentioned in this application may include a battery cell, a battery module, or a battery pack. A battery cell is the smallest unit constituting a secondary battery, and it alone can realize the function of charging and discharging. The present application does not have particular limitation on the shape of the battery cell, which may be cylindrical, square, or in other arbitrary shapes. Fig. 1 shows a battery cell 5 with a rectangular structure as an example.

In some embodiments, the battery cell includes an electrode assembly, and the cell may further include an outer packaging. The electrode assembly may be made of positive electrode plate, negative electrode plate, separator, etc. through winding process and/or lamination process, and the outer packaging may be used to package the above electrode assembly. The outer packaging may be a hard package, such as a hard plastic housing, an aluminum housing, steel housing, or the like. The outer packaging may also be a soft package, such as a pouch type soft package. The material of the soft package may be plastic, such as one or more of polypropylene (PP), polybutylene terephthalate (PBT), polybutylene succinate (PBS), and the like.

In some embodiments, referring to Fig. 2, the outer packaging may include a casing 51 and a cover plate 53. The casing 51 may include a bottom plate and side plates connected to the bottom plate, and the bottom plate and the side plate are combined to form an accommodating cavity. The casing 51 has an opening communicating with the accommodating cavity, and the cover plate 53 can cover the opening to close the accommodating cavity. The battery assembly 52 is encapsulated in the accommodating cavity. The number of electrode assemblies 52 included in the battery cell 5 may be one or several, which can be adjusted according to requirements.

In some embodiments, the battery cell may be assembled into a battery module, the battery module may include a plurality of battery cells, and the specific number can be adjusted according to the application and capacity of the battery module. Fig. 3 is a schematic diagram of a battery module 4 as an example. Referring to Fig. 3, in the battery module 4, a plurality of battery cells 5 may be disposed sequentially in the length direction of the battery module 4. Apparently, they may also be disposed in any other manner. Further, a plurality of battery cells 5 may be fixed by a fastener.

Optionally, the battery module 4 may further include a casing having a receiving space, in which a plurality of battery cells 5 are accommodated.

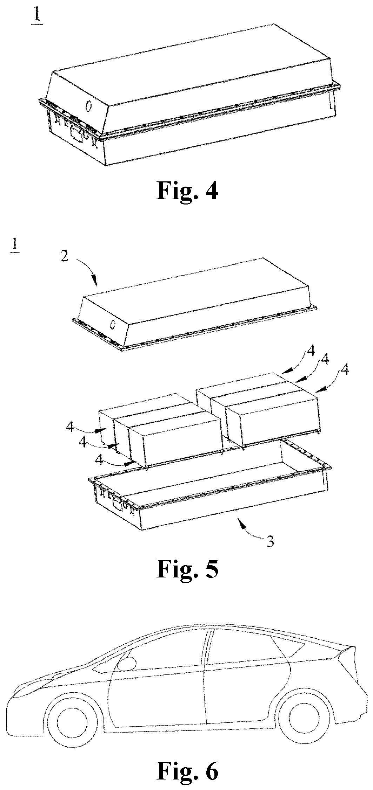

In some embodiments, the above-mentioned battery module may also be assembled into a battery pack, and the number of battery modules contained in the battery pack can be adjusted according to the application and capacity of the battery pack. Figs. 4 and 5 are schematic diagrams of battery pack 1 as an example. As shown in Figs. 4 and 5, the battery pack 1 may comprise a battery case and a plurality of the battery modules 4 disposed in the battery case. The battery case comprises an upper case body 2 and a lower case body 3. The upper case body 2 is used for covering the lower case body 3 to form a closed space for receiving the battery modules 4. A plurality of battery modules 4 can be disposed in the battery case in any manner.

The present application has no particular limitation on the type of the secondary battery. For example, the secondary battery may include, but not limited to, a lithium ion battery, a sodium ion battery, and the like.

### [Negative electrode plate]

In some embodiments, the negative electrode plate comprises a negative positive electrode current collector and a negative electrode film layer which is disposed on at least one surface of the negative electrode current collector and comprises a negative electrode active material. For example, the negative current collector has two opposite surfaces along the thickness direction of the negative current collector, and the positive electrode film layer is disposed on any one or both of the two opposite surfaces of the negative current collector.

In some embodiments, the negative electrode film layer comprises a negative electrode active material of the first aspect of embodiments of this application or the negative electrode active material prepared by the method of the second aspect of embodiments of this application. As a result, the secondary battery can have high energy density, high initial coulombic efficiency, and long cycle life expansion at the same time. In some embodiments, the negative electrode film layer may further include other negative electrode active materials in addition to the above-mentioned negative electrode active material. In some embodiments, the other negative electrode active materials include but are not limited to one or more of natural graphite, artificial graphite, soft carbon, hard carbon, elemental silicon, silicon oxide, silicon-nitrogen composite, silicon alloy material, elemental tin, tin oxide, tin alloy materials and lithium titanate. The present application is not limited to these materials, but may use other conventionally known materials that can be used as negative electrode active materials for secondary batteries.

In some embodiments, the negative electrode film layer may also optionally comprise a conductive agent for negative electrode. The application has no special restrictions on the type of the conductive agent for negative electrode. As an example, the conductive agent for negative electrode may include one or more of superconducting carbon, conductive graphite, acetylene black, carbon black, Ketjen black, carbon dots, carbon nanotubes, graphene and carbon nanofibers.

In some embodiments, the negative electrode film layer may further optionally comprises a binder for negative electrode. The present application does not particularly limit the type of the binder for negative electrode, and as an example, the binder for negative electrode may include one or more of styrene-butadiene rubber (SBR), water-soluble unsaturated resin SR-1B, aqueous acrylic resins (e.g., polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS).

In some embodiments, the negative electrode film layer may further optionally comprises other auxiliary agents. As examples, other auxiliary agents may include thickeners, e.g., sodium carboxymethylcellulose (CMC-Na), PTC thermistor material, etc.

In some embodiments, the negative electrode collector may be a metal foil or a composite collector. As an example of a metal foil, a copper foil may be used. The composite current collector may include a base layer of polymeric material and a layer of metallic material formed on at least one surface of the base layer of polymeric material. As an example, the metal material may comprise one or more of copper, copper alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The negative electrode film layer is usually formed by applying a negative electrode slurry on a negative electrode collector, drying and cold-pressing. The negative electrode slurry is typically formed by dispersing the negative electrode active material, optional conductive agent, optional binder, other optional auxiliary agents in a solvent and stirring well. The solvent may be N-methylpyrrolidone (NMP) or deionized water, but is not limited thereto.

The negative electrode plate does not exclude additional functional layers other than the negative electrode film layer. For example, in some embodiments, the negative electrode plate described in the present application may also comprise a conductive primer layer (such as composed of a conductive agent and a binder) sandwiched between the negative electrode current collector and the negative electrode film layer, and arranged on the surface of the negative electrode current collector; in some embodiments, the negative electrode plate described in this application may also comprise a protective layer covering the surface of the negative electrode film layer.

### [Positive electrode plate]

In some embodiments, the positive electrode plate comprises a positive electrode current collector and a positive electrode film layer which is disposed on at least one surface of the positive electrode current collector and comprises a positive electrode active material. For example, the positive current collector has two opposite surfaces along the thickness direction of the positive current collector, and the positive electrode film layer is disposed on any one or both of the two opposite surfaces of the positive current collector.

The positive electrode film layer includes a positive electrode active material, and the positive electrode active material can be a positive electrode active material known in the art for secondary batteries.

When the secondary battery of the present application is a lithium ion battery, the positive electrode active material may comprise one or more of lithium transition metal oxides, lithium-containing phosphates with olivine structure, and their respective modified compounds thereof. Examples of lithium transition metal oxides may comprise one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide and their respective modified compounds. Examples of lithium-containing phosphates with olivine structure may comprise one or more of lithium iron phosphate, composite of lithium iron phosphate with carbon, lithium manganese phosphate, composite of lithium manganese phosphate with carbon, lithium manganese iron phosphate, composite of lithium manganese iron phosphate with carbon, and respective modified compounds thereof. The present application is not limited to these materials, but may use other conventionally known materials that can be used as positive electrode active materials for secondary batteries.

In some embodiments, in order to further increase the energy density of the secondary battery, the positive electrode active material for the lithium-ion battery may comprise one or more of lithium transition metal oxides having general formula LiₐNi_{b}Co_{c}M_{d}OₑAᵣ and modified compounds thereof. 0.8≤a≤1.2, 0.5≤b<1, 0<c<1, 0<d<1, 1≤e≤2, 0≤f≤1, M includes one or more of Mn, Al, Zr, Zn, Cu, Cr, Mg, Fe, V, Ti and B, and A includes one or more of N, F, S and Cl.

As an example, positive electrode active materials for lithium-ion batteries may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.005}O₂, LiFePO₄ and LiMnPO₄.

When the secondary battery of the present application is a sodium ion battery, the positive electrode active material may include but not limited to one or more of sodium-containing transition metal oxides, polyanion materials (such as phosphate, fluorophosphate, pyrophosphate, sulfate, etc.), and Prussian blue materials.

As an example, a positive electrode active material for a sodium-ion battery may include one or more of NaFeO₂, NaCoO₂, NaCrO₂, NaMnO₂, NaNiO₂, NaNi_{1/2}Ti_{1/2}O₀₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, Prussian blue material and the materials having the general formula XₚM'_{q}(PO₄)ᵣOₓY₃₋ₓ. In general formula XₚM'_{q}(PO₄)ᵣOₓY₃₋ₓ, 0<p≤4, 0<q≤2, 1≤r≤3, 0≤x≤2, X includes one or more of H⁺, Li⁺, Na⁺, K⁺ and NH₄⁺, M' is a transition metal cation, optionally including one or more selected from V, Ti, Mn, Fe, Co, Ni, Cu and Zn, and Y is a halogen anion and optionally comprising one or more selected from F, Cl and Br.

In the present application, the modified compounds of the above positive electrode active materials may be doping-modified and/or surface coating-modified of the positive electrode active materials.

In some embodiments, the positive electrode film layer may also optionally comprise a conductive agent for positive electrode. The application has no special restrictions on the type of the conductive agent for positive electrode. As an example, the conductive agent for positive electrode include one or more of superconducting carbon, conductive graphite, acetylene black, carbon black, Ketjen black, carbon dots, carbon nanotubes, graphene and carbon nanofibers.

In some embodiments, the positive electrode film layer may further optionally comprise a binder for positive electrode. The present application does not particularly limit the type of the binder for positive electrode, and as an example, the binder for positive electrode may comprise one of more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, vinylidene fluoride-hexafluoropropylene copolymer, and fluorinated acrylate resins.

In some embodiments, the positive electrode current collector may be a metal foil or a composite current collector. As an example of the metal foil, aluminum foil may be used. The composite current collector may include a base layer of polymeric material and a layer of metallic material formed on at least one surface of the base layer of polymeric material. As an example, the metal material may comprise one or more of aluminum, aluminum alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The positive electrode film layer is usually formed by applying a positive electrode slurry on a positive electrode current collector, drying and cold-pressing. The positive electrode slurry is usually formed by dispersing positive electrode active material, an optional conductive agent, an optional binder and any other components in a solvent and stirring them uniformly. The solvent may be N-methylpyrrolidone (NMP), but is not limited thereto.

### [Electrolyte]

The electrolyte provides the function of conducting active ions between the positive electrode plate and the negative electrode plate. There is no specific limitation on the type of electrolyte in the present application, and it can be selected according to the requirement. For example, the electrolyte may comprise one or more of solid electrolyte and liquid electrolyte (i.e., electrolytic solution).

In some embodiments, the electrolyte is an electrolytic solution, and the electrolytic solution includes an electrolyte salt and a solvent.

When the secondary battery of the present application is a lithium ion battery, as an example, the electrolyte salt may comprise one or more of lithium hexafluorophosphate (LiPF₆), lithium tetrafluoroborate (LiBF₄), lithium perchlorate (LiClO₄), lithium hexafluoroarsenate (LiAsF₆), lithium difluorosulfimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate (LiPO₂F₂), lithium difluorobisoxalate phosphate (LiDFOP), and lithium tetrafluorooxalate phosphate (LiTFOP).

When the secondary battery of the present application is a sodium ion battery, in particular, when it is a sodium ion secondary battery, the electrolyte salt may comprise one or more of sodium hexafluorophosphate (NaPF₆), sodium tetrafluoroborate (NaBF₄), sodium perchlorate (NaClO₄), sodium hexafluoroarsenate (NaAsF₆), sodium bisfluorosulfonimide (NaFSI), sodium bistrifluoromethanesulfonimide (NaTFSI), sodium trifluoromethanesulfonate (NaTFS), sodium difluorooxalate borate (NaDFOB), sodium dioxalate borate (NaBOB), sodium difluorophosphate (NaPO₂F₂), sodium difluorooxalate phosphate (NaDFOP) and sodium tetrafluorooxalate phosphate (NaTFOP).

There is no specific limitation on the type of solvent, and it can be selected according to actual needs. In some embodiments, as an example, the solvent may comprise one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethylsulfone (MSM), methylethylsulfone (EMS), and diethylsulfone (ESE).

In some embodiments, the electrolytic solution may optionally comprise an additive. For example, the additives may comprise negative electrode film-forming additives, positive electrode film-forming additives, and additives that can improve certain performance of the battery, such as additives that improve overcharging performance of the battery, additives that improve high-temperature performance of the battery, and additives that improve low-temperature power/rating performance of the battery.

### [Separator]

In secondary batteries that use electrolytic solution, and some secondary batteries that use solid electrolytes, a separator is also included. The separator is arranged between the positive electrode plate and the negative electrode plate and is mainly used to prevent the short circuit between the positive electrode and the negative electrode and at the same time allows active ions to pass through. The type of the separator is not particularly limited in the present application, and any well-known porous structure separator having electrochemical stability and mechanical stability can be selected.

In some embodiments, the separator may comprise one or more of glass fiber, non-woven fabric, polyethylene, polypropylene and polyvinylidene fluoride. The separator can be a single-layer film or a multilayer film. When the separator is a multilayer film, the materials of each layer are the same or different.

### [Preparation method]

The preparation method of the secondary battery of the present application is well-known. In some embodiments, a positive electrode plate, a separator, a negative electrode plate, and electrolytic solution can be assembled to form a secondary battery. As an example, the positive electrode plate, the separator, and the negative electrode plate can be formed into an electrode assembly by a winding process or a laminating process; the battery assembly is placed in an outer package, into which the electrolytic solution is injected after it is dried. After that, the processes of vacuum packing, steady standing, formation, and shaping are carried out, thereby obtaining a battery cell. A plurality of battery cells may further be connected in series, in parallel or in series-parallel to form a battery module. Then multiple battery modules may also be connected in series, in parallel or in series-parallel to form a box pack. In some embodiments, the multiple battery cells may also be directly assembled into a battery pack.

### Electrical device

Embodiments of the present application further provide an electrical device comprising the secondary battery of the present application. The secondary battery may be used as a power source of the electrical device, and may also be used as an energy storage unit of the electrical device. The electrical device may be, but is not limited to, a mobile device (e.g., a mobile phone, a tablet computer, a laptop computer, etc.), an electric vehicle (e.g., a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, etc.

The electrical device may select a specific type of secondary battery according to its usage requirements, such as battery cells, battery modules, or battery packs.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module may be used as a power supply.

As another example, the electrical device may be a mobile phone, a tablet computer, a notebook computer, etc. The electric device is generally required to be light and thin, and a battery cell may be used as a power supply.

### Examples

The following examples are intended to describe the present application more specifically, merely for the purpose of illustration. Various modifications and variations within the scope of the present application are apparent to those skilled in the related art. Unless otherwise stated, all parts, percentages, and ratios reported in the following examples are based on mass, and all reagents used in the examples are commercially available or synthesized by conventional methods, and can be directly obtained without further treatment, and the instruments used in the examples are commercially available.

### Example 1

### (1) Preparation of negative electrode active material

Step 1: 1 kg of commercially available porous biomass carbon (with a BET surface area of 1545 m²/g and a volume particle size Dv50 of about 6 µm, which can also be obtained by making pores with a pore-forming agent) was selected to be placed in a graphitization furnace, and heated up to 2400°C at a rate of 5°C/min under nitrogen protection to perform the graphitization process, and the mixture was held at 2400°C for 2 h. At the end of the process, the carbon was cooled down to room temperature to obtain the carbon matrix having a graphitization degree of 87%, an initial coulombic efficiency of 85%, a powder resistivity of 5.5×10⁻³Ω-cm, and a BET specific surface area of 100 m²/g.

Step 2: The above carbon matrix was placed as a substrate in a gas phase deposition furnace, then the temperature was raised to 500°C at a rate of 5°C/min, and the first gas mixture containing 20% silicane and 80% nitrogen (by volume) was introduced, with the total gas flow rate of 5 L/min, and the pressure in the reactor was 200 Pa higher than atmospheric pressure, and the deposition reaction was carried out for 8h.

Step 3: The first mixture of gas was shut off, then the temperature was raised to 800°C at a rate of 5°C/min, and the second gas mixture containing 40% acetylene and 60% nitrogen (by volume) was introduced, with the total gas flow rate of 0.8 L/min, and the deposition reaction was carried out for 2h. After cooling, discharging, and passing through a 325 mesh screen, the negative electrode active material was obtained.

### (2) Preparation of secondary battery (full-cell)

Preparation of the negative electrode plate: the negative electrode active material prepared above, the conductive carbon black and carbon nanotubes as a conductive agent, and the polyacrylic acid as binder were mixed at a mass ratio of 95:1.9:0.1:3, and then added to the deionized water as solvent; the resulting mixture was stirred under the action of a fast mixer until the system was uniform and a negative electrode slurry with a solid content of 45% was obtained; the negative electrode slurry was evenly applied on the copper foil of the negative electrode current collector, dried at 85°C, and cold-pressed to give the negative electrode plate.

Preparation of positive electrode plate: The positive electrode active material LiNi_{0.8}Co_{0.1}Mn_{0.1}O₂ (NCM811), the carbon black (Super P) as conductive agent, and polyvinylidene fluoride (PVDF) as binder were mixed at a mass ratio of 97:1:2 in an appropriate amount of solvent NMP with thorough stirring to form a uniform positive electrode slurry; the positive electrode slurry was uniformly applied on the surface of the aluminum foil of positive electrode collector, and then dried and cold-pressed, to give the positive electrode plate.

Preparation of electrolytic solution: ethylene carbonate (EC), ethyl methyl carbonate (EMC) and diethyl carbonate (DEC) at a volume ratio of 20:20:60 were uniformly mixed as an organic solvent, and then LiPF₆ was dissolved in the above organic solvent, and fluoroethylene carbonate (FEC) was added, with the concentration of LiPF₆ in the electrolytic solution of 1 mol/L and the mass percentage of FEC of 5 wt%.

Preparation of the separator: Celgard 2400 separator was used.

Preparation of secondary batteries: the positive electrode plate, separator, and negative electrode plate was laminated and coiled in sequence to obtain an electrode assembly; the electrode assembly was placed in an outer packaging and dried, followed by injection with electrolytic solution; after the processes including vacuum encapsulation, standing, formation, shaping, a secondary battery was obtained.

### (3) Preparation of button battery (half-cell)

The negative electrode active material prepared above, the conductive carbon black as a conductive agent, and the polyacrylic acid as binder were mixed at a mass ratio of 8:1:1, and then added to the deionized water as solvent; the resulting mixture was stirred under the action of a fast mixer until the system was uniform and a negative electrode slurry with a solid content of 45% was obtained; the negative electrode slurry was evenly applied on the copper foil of the negative electrode current collector, dried at 85°C, and cold-pressed to give an electrode plate. A lithium metal sheet was used as a counter electrode, a Celgard 2400 separator was used, and the same electrolytic solution as that used for the preparation of the secondary battery was injected; after assembling, a button battery is obtained.

### Examples 2-24

The preparation method of the secondary battery and the button battery was similar to that of Example 1, except that the preparation process parameters of the negative electrode active material were adjusted, as shown in Table 1 for details.

### Comparative Example 1

The preparation method of the secondary battery and the button battery was similar to that of Example 1, except the use of amorphous carbon-coated crystalline silicon as the negative electrode active material, with a coating thickness of 80nm.

Step 1: providing crystalline silicon particles with a volume particle size (Dv50) of 500nm.

Step 2: placing the crystalline silicon particles in a rotary furnace, introducing a mixed gas containing 40% acetylene and 60% nitrogen (by volume) into the furnace, with a total gas flow rate of 0.8L/min, and performing deposition reaction at 800°C for 2 hours; after cooling, discharging, crystalline silicon particles coated with amorphous carbon was obtained.

### Comparative Example 2

The preparation method of the secondary battery and the button battery was similar to that of Example 1, except that the preparation process parameters of the negative electrode active material were adjusted.

Step 1: Mechanical crushing, grading, spheroidization, and purification of 100 mesh flake graphite were carried out to obtain natural spherical graphite.

Step 2: 1kg of natural spherical graphite was selected as the substrate and placed in a vapor phase deposition furnace. The substrate was heated at a rate of 5°C/min to 500°C. Then a first mixed gas containing 20% silicane and 80% nitrogen (by volume) was introduced into the furnace. The total gas flow rate was 5L/min, the pressure inside the furnace was 200Pa higher than atmospheric pressure, and the deposition reaction was carried out for 8h.

Step 3: The first mixture of gas was shut off, then the temperature was raised to 800°C at a rate of 5°C/min, and the second gas mixture containing 40% acetylene and 60% nitrogen (by volume) was introduced, with the total gas flow rate of 0.8 L/min, and the deposition reaction was carried out for 2h. After cooling, discharging, and passing through a 325 mesh screen, the negative electrode active material was obtained.

### Comparative Example 3

The preparation method of the secondary battery and the button battery was similar to that of Example 1, except that the preparation process parameters of the negative electrode active material were adjusted, as shown in Table 1 for details.

### Comparative Example 4

The preparation method of the secondary battery and the button battery was similar to that of Example 1, except that the preparation process parameters of the negative electrode active material were adjusted.

Step 1: 1kg of porous biomass carbon was directly used as the carbon matrix without graphitization

Step 2: the above carbon matrix was used as the substrate and placed in a vapor phase deposition furnace. The substrate was heated at a rate of 5°C/min to 500°C. Then a first mixed gas containing 20% silicane and 80% nitrogen (by volume) was introduced into the furnace. The total gas flow rate was 5L/min, the pressure inside the furnace was 200Pa higher than atmospheric pressure, and the deposition reaction was carried out for 8h.

Step 3: The first mixture of gas was shut off, then the temperature was raised to 800°C at a rate of 5°C/min, and the second gas mixture containing 40% acetylene and 60% nitrogen (by volume) was introduced, with the total gas flow rate of 0.8 L/min, and the deposition reaction was carried out for 2h. After cooling, discharging, and passing through a 325 mesh screen, the negative electrode active material was obtained.

### Test section

### (1) Test of graphitization degree of carbon matrix and negative electrode active material

With reference to JIS K 0131-1996 and JB/T 4220-2011, the average interplanar spacing d₀₀₂ of (002) crystal planes in the crystalline structure of the carbon material was obtained and then the graphitization degree of the carbon material was 97.3% according to the formula g = (0.344-d₀₀₂)/(0.344-0.3354)×100%. The testing instrument can be a Bruker D8 Discover X-ray diffractometer.

### (2) Test of the initial columbic efficiency of carbon matrix

The carbon matrix prepared as described above was mixed with a conductive agent (conductive carbon black), a binder (polyacrylic acid), and deionized water at a mass ratio of 8:1:1 to obtain a uniform slurry with a solid content of 45%. This slurry was then evenly applied onto a copper foil negative electrode collector, dried at 85°C, and cold-pressed to form an electrode plate. A lithium metal sheet was used as the counter electrode, and a Celgard 2400 separator was employed. The same electrolytic solution used in Example 1 was injected, and after assembling a button battery (half-cell) was obtained.

After allowing the button battery to stand for 4 hours, it was placed in a blue electricity test cabinet and discharged at a constant current of 0.05C until reaching 5mV. After standing for 10 minutes, the button battery was discharged at a constant current of 50µA until reaching 5mV, and the total discharging capacity was recorded; the button battery was then rested for 10 minutes before being charged at a constant current of 0.1C until reaching 2.0V, and the charging capacity was recorded. The initial coulombic efficiency of the carbon matrix was calculated as the ratio of the charging capacity to the total discharging capacity.

### (3) Test of powder resistivity of carbon matrix and negative electrode active material

A certain amount of carbon matrix and negative electrode active material powder samples was placed in the feeding cup of a resistivity tester, and a certain pressure was applied and the data was manually collected to record the powder resistivity test results at different pressures. In the present application, the testing pressure can be 16MPa.

### (4) Test of specific surface area of carbon matrix

A test method with analysis of specific surface area by nitrogen adsorption is used for testing, referring to GB/T 19587-2004, and the specific surface area can be calculated by the BET (Brunauer Emmett Teller) method. The testing instrument may be a TRISTAR II 3020 specific surface area and porosity analyzer from Micromeritics, USA.

### (5) Test of grain size of filling material

A dual-beam focused ion beam-scanning electron microscope (Dual Beam FIB-SEM) was used to extract a sample from the middle area of the negative electrode active material particle, and the grain size of the filling material was measured by using a high-resolution transmission electron microscope (HRTEM).

### (6) Test of element content in negative electrode active material

The content of carbon element in the negative electrode active material was tested with reference to GB/T 20123-2006/ISO 15350:2000, and the test instrument can be an HCS-140 infrared carbon-sulfur analyzer. The content of silicon element in the negative electrode active material was tested with reference to GB/T 20975.5-2020. The content of tin element in the negative electrode active material was tested with reference to GB/T 20975.5-2020. The content of germanium content in the negative electrode active material was tested with reference to GB/T 20127.6-2006.

### (7) Test of X-ray diffraction spectrum of negative electrode active material

According to JIS K 0131-1996, the crystal lattice parameters was calculated by using an X-ray diffractometer and the peak positions of C 002 and Si 111 for two parallel samples was obtained by using the centroid method, and the testing angle range can be 20°-80°. From the X-ray diffraction spectrum of the negative electrode active material, the full width at half maximum of the (002) crystal plane peak at 26.4° and the full width at half maximum of the (111) crystal plane peak at 28.6° were obtained. The testing instrument can be a Bruker D8 Discover X-ray diffractometer.

### (8)Test of initial coulombic efficiency of negative electrode active material

After allowing the button (half-cell) batteries prepared in each example and comparative example to stand for 4 hours, they were placed in a blue electricity test cabinet. The batteries were discharged at a constant current of 0.05C until reaching 5mV, and then allowed to rest for 10 minutes. Subsequently, the batteries were discharged at a constant current of 50µA until reaching 5mV, and the total discharging capacity was recorded, which represents the lithium intercalation capacity. The batteries were then allowed to rest for another 10 minutes before being charged at a constant current of 0.1C until reaching 2V, and the charging capacity was recorded, which represents the lithium deintercalation capacity. The initial coulombic efficiency of the negative electrode active material was calculated as the ratio of the deintercalation capacity to the intercalation capacity.

### (9) Test of cycle performance of secondary battery

At 25°C, the secondary battery prepared above was fully charged at 0.5C and then fully discharged at 1C. This was a cyclic charge and discharge process, and the discharging capacity at this time was recorded as the initial discharging capacity. The secondary battery was subjected to tests of cycles of charge and discharge according to the above method, and the discharging capacity for each cycle was recorded until the discharge capacity of the lithium ion battery decays to 80% at which and the number of cycles of the secondary battery was recorded. The higher the cycle number of the secondary battery, the better the cycle performance.

**Table 1**

| No. | Step 1 | | | Step 2 | | | Step 3 | | |
|---|---|---|---|---|---|---|---|---|---|
| | Carbon source | Graphitizati on temperature (°C) \ | Holding time (h) | First gas mixture (v/v) | Deposit tion temper ature (°C) | Deposi tion time (h) | Second gas mixture (v/v) | Deposit tion temper ature (°C) | Depos ition time (h) |
| Comparative Example 1 | Crystalline silicon | | | acetylene: nitrogen=40:60 | 800 | 2 | | / | / |
| Comparative Example 2 | Natural spherical graphite | / | / | silicane:nitrogen=20:80 | 500 | 8 | acetylene: nitrogen=40:60 | 800 | 2 |
| Comparative Example 3 | Porous biomass carbon | 2800 | 10 | silicane:nitrogen=20:80 | 500 | 8 | acetylene: nitrogen=40:60 | 800 | 2 |
| Comparative Example 4 | Porous biomass carbon | / | / | silicane:nitrogen=20:80 | 500 | 8 | acetylene: nitrogen=40:60 | 800 | 2 |
| Example 1 | Porous biomass carbon | 2400 | 2 | silicane:nitrogen=20:80 | 500 | 8 | acetylene: nitrogen=40:60 | 800 | 2 |
| Example 2 | Porous biomass carbon | 2200 | 8 | silicane:nitrogen=20:80 | 500 | 8 | acetylene: nitrogen=40:60 | 800 | 2 |
| Example 3 | Porous biomass carbon | 2000 | 6 | silicane:nitrogen=20:80 | 500 | 8 | acetylene: nitrogen=40:60 | 800 | 2 |
| Example 4 | Porous biomass carbon | 1900 | 12 | silicane:nitrogen=20:80 | 500 | 8 | acetylene: nitrogen=40:60 | 800 | 2 |
| Example 5 | Porous biomass carbon | 1700 | 8 | silicane:nitrogen=20:80 | 500 | 8 | acetylene: nitrogen=40:60 | 800 | 2 |
| Example 6 | Porous biomass carbon | 1600 | 10 | silicane:nitrogen=20:80 | 500 | 8 | acetylene: nitrogen=40:60 | 800 | 2 |
| Example 7 | Porous biomass carbon | 1600 | 2 | silicane:nitrogen=20:80 | 500 | 8 | acetylene: nitrogen=40:60 | 800 | 2 |
| Example 8 | Porous biomass carbon | 1900 | 12 | silicane:nitrogen=20:80 | 1000 | 18 | acetylene: nitrogen=40:60 | 800 | 2 |
| Example 9 | Porous biomass carbon | 1900 | 12 | silicane:nitrogen=20:80 | 900 | 12 | acetylene: nitrogen=40:60 | 800 | 2 |
| Example 10 | Porous biomass carbon | 1900 | 12 | silicane:nitrogen=20:80 | 900 | 8 | acetylene: nitrogen=40:60 | 800 | 2 |
| Example 11 | Porous biomass carbon | 1900 | 12 | silicane:nitrogen=20:80 | 850 | 12 | acetylene: nitrogen=40:60 | 800 | 2 |
| Example 12 | Porous biomass carbon | 1900 | 12 | silicane:nitrogen=20:80 | 800 | 10 | acetylene: nitrogen=40:60 | 800 | 2 |
| Example 13 | Porous biomass carbon | 1900 | 12 | silicane:nitrogen=20:80 | 600 | 10 | acetylene: nitrogen=40:60 | 800 | 2 |
| Example 14 | Porous biomass carbon | 2200 | 8 | silicane:nitrogen=20:80 | 500 | 8 | acetylene: nitrogen=40:60 | 850 | 4 |
| Example 15 | Porous biomass carbon | 2200 | 8 | silicane:nitrogen=20:80 | 500 | 8 | acetylene: nitrogen=30:60 | 800 | 3 |
| Example 16 | Porous biomass carbon | 2200 | 8 | silicane:nitrogen=20:80 | 500 | 8 | methane: nitrogen =40:60 | 850 | 4 |
| Example 17 | Porous biomass carbon | 2200 | 8 | silicane:nitrogen=20:80 | 500 | 8 | ethylene: nitrogen =40:60 | 750 | 2 |
| Example 18 | Porous biomass carbon | 2200 | 8 | silicane:nitrogen=20:80 | 500 | 8 | propane: nitrogen =40:60 | 850 | 4 |
| Example 19 | Porous biomass carbon | 2200 | 8 | silicane:nitrogen=20:80 | 500 | 8 | propyne: nitrogen =40:60 | 700 | 1 |
| Example 20 | Porous biomass carbon | 2200 | 8 | silicane:nitrogen=20:80 | 500 | 8 | | / | / |
| Example 21 | Porous biomass carbon | 1900 | 12 | silicane: acetylene: nitrogen =10:20:70 | 550 | 12 | acetylene: nitrogen =40:60 | 800 | 2 |
| Example 22 | Porous biomass carbon | 1900 | 12 | silicane: germane: nitrogen =10:10:80 | 550 | 6 | acetylene: nitrogen =40:60 | 800 | 2 |
| Example 23 | Porous biomass carbon | 1900 | 12 | stannane: nitrogen =10:90 | 600 | 7 | acetylene: nitrogen=40:60 | 800 | 2 |
| Example 24 | Porous biomass carbon | 1900 | 12 | germane: nitrogen =10:90 | 440 | 6 | acetylene: nitrogen=40:60 | 800 | 2 |

**Table 2**

| No. | Carbon matrix | | | | Filling material | | Coating layer | Negative electrode active material | | | | | Initial columbic efficiency of half-cell | Initial columbic efficiency of full-cell |
|---|---|---|---|---|---|---|---|---|---|---|---|---|---|---|
| | Graphitizati on degree | Initial columbic efficiency | Powder resistivity (Ω•cm) | Specific surface area (m²/g) | Type | Grain size (nm) | Thickness (nm) | Content of carbon element | Content of silicon element | Ratio of the full width at half maximum of the (002) crystal plane peak to that of the (111) crystal plane peak | Graphitizati on degree | Powder resistivity (Ω•cm) | | |
| Comparative Example 1 | / | / | / | / | / | / | 80 | 5.0% | 95.0% | 0.3 | / | 2000 | 93.0% | 200 |
| Comparative Example 2 | 91% | 95% | 2.0×10⁻³ | 3 | Elemental silicon | 8 | 50 | 50.0% | 50.0% | 1 | 91% | 6.0×10⁻³ | 93.0% | 450 |
| Comparative Example 3 | 92% | 89% | 1.0×10^{- 3} | 45 | Elemental silicon | 8 | 50 | 50.0% | 50.0% | 45 | 92% | 3.0×10⁻³ | 94.0% | 500 |
| Comparative Example 4 | 0 | 20% | 200 | 1545 | Elemental silicon | 8 | 50 | 30.0% | 70.0% | 0.01 | 0 | 2500 | 45.0% | 350 |
| Example 1 | 87% | 85% | 5.5×10⁻³ | 100 | Elemental silicon | 8 | 50 | 50.0% | 50.0% | 16 | 87% | 1.5×10⁻² | 94.0% | 1000 |
| Example 2 | 84% | 83% | 7.5×10⁻³ | 188 | Elemental silicon | 8 | 50 | 47.0% | 53.0% | 13 | 84% | 2.5×10⁻² | 93.4% | 1050 |
| Example 3 | 80% | 80% | 9.5×10⁻³ | 367 | Elemental silicon | 8 | 50 | 46.0% | 54.0% | 7 | 80% | 3.5×10⁻² | 92.7% | 850 |
| Example 4 | 75% | 78% | 1.5×10⁻² | 478 | Elemental silicon | 8 | 50 | 48.0% | 52.0% | 4 | 75% | 5.0×10⁻² | 92.3% | 800 |
| Example 5 | 65% | 75% | 3.5×10⁻² | 568 | Elemental silicon | 8 | 50 | 47.0% | 53.0% | 2 | 65% | 2.0×10⁻¹ | 92.2% | 750 |
| Example 6 | 60% | 56% | 8.5×10⁻² | 1100 | Elemental silicon | 8 | 50 | 46.0% | 54.0% | 0.25 | 60% | 6.0×10⁻¹ | 86.0% | 700 |
| Example 7 | 40% | 28% | 4.5×10⁻¹ | 1230 | Elemental silicon | 8 | 50 | 48.0% | 52.0% | 0.1 | 40% | 3.5 | 82.0% | 600 |
| Example 8 | 75% | 78% | 1.5×10⁻² | 478 | Elemental silicon | 60 | 50 | 48.0% | 52.0% | 24 | 75% | 5.0×10⁻² | 95.0% | 580 |
| Example 9 | 75% | 78% | 1.5×10⁻² | 478 | Elemental silicon | 50 | 50 | 47.0% | 53.0% | 19 | 75% | 5.2×10⁻² | 94.3% | 700 |
| Example 10 | 75% | 78% | 1.5×10⁻² | 478 | Elemental silicon | 30 | 50 | 48.0% | 52.0% | 14 | 75% | 5.1×10⁻² | 93.8% | 750 |
| Example 11 | 75% | 78% | 1.5×10⁻² | 478 | Elemental silicon | 20 | 50 | 49.0% | 51.0% | 10 | 75% | 4.9×10⁻² | 93.6% | 750 |
| Example 12 | 75% | 78% | 1.5×10⁻² | 478 | Elemental silicon | 10 | 50 | 48.0% | 52.0% | 7 | 75% | 5.0×10⁻² | 93.2% | 800 |
| Example 13 | 75% | 78% | 1.5×10⁻² | 478 | Elemental silicon | 2 | 50 | 48.0% | 52.0% | 0.8 | 75% | 5.1×10⁻² | 92.3% | 900 |
| Example 14 | 84% | 83% | 7.5×10⁻³ | 188 | Elemental silicon | 8 | 150 | 50.0% | 50.0% | 24 | 84% | 2.0×10⁻² | 95.0% | 700 |
| Example 15 | 84% | 83% | 7.5×10⁻³ | 188 | Elemental silicon | 8 | 100 | 48.0% | 52.0% | 19 | 84% | 2.4×10⁻² | 94.3% | 780 |
| Example 16 | 84% | 83% | 7.5×10⁻³ | 188 | Elemental silicon | 8 | 75 | 48.3% | 51.7% | 14 | 84% | 2.4×10⁻² | 93.8% | 800 |
| Example 17 | 84% | 83% | 7.5×10⁻³ | 189 | Elemental silicon | 8 | 50 | 48.9% | 51.1% | 10 | 84% | 2.3×10⁻² | 93.6% | 965 |
| Example 18 | 84% | 83% | 7.5×10⁻³ | 188 | Elemental silicon | 8 | 10 | 48.2% | 51.8% | 7 | 84% | 2.4×10⁻² | 93.2% | 800 |
| Example 19 | 84% | 83% | 7.5×10⁻³ | 188 | Elemental silicon | 8 | 5 | 48.0% | 52.0% | 0.8 | 84% | 2.5×10⁻² | 93.0% | 780 |
| Example 20 | 84% | 83% | 7.5×10⁻³ | 188 | Elemental silicon | 8 | 0 | 45.0% | 55.0% | 0.8 | 84% | 2.8×10⁻² | 93.0% | 700 |
| Example 21 | 75% | 78% | 1.5×10⁻² | 478 | Silicon-carbon material | 10 | 50 | *53.0%* | 47.0% | 2.4 | 75% | 3.0×10⁻² | 94.0% | 950 |
| Example 22 | 75% | 78% | 1.5×10⁻² | 478 | Silicon alloy | 15 | 50 | 40.0% | 40%(Si)+ 20%(Ge) | 3.3 | 75% | 3.8×10⁻² | 93.2% | 900 |
| Example 23 | 75% | 78% | 1.5×10⁻² | 478 | Elemental tin | 27 | 50 | 60.0% | 40%(Sn) | / | 75% | 8.0×10⁻² | 94.5% | 700 |
| Example 24 | 75% | 78% | 1.5×10⁻² | 478 | Elemental germanium | 24 | 50 | 57.0% | 43%(Ge) | / | 75% | 5.0×10⁻² | 94.1% | 800 |

The comprehensive test results from Table 2 show that by incorporating filling materials with the advantage of high specific capacity, such as silicon-based, tin-based, and germanium-based materials, within the pore structure of a carbon matrix with a graphitization degree of less than or equal to 87%, the resulting negative electrode active material can achieve a balance of high specific capacity, high initial coulombic efficiency, high conductivity, and good cycle stability. This, in turn, it enables secondary batteries to have high energy density, high initial coulombic efficiency, and long cycle life. From the comprehensive test results of Examples 1-7, it is also known that when the graphitization degree of the carbon matrix is 65%-87%, the prepared negative electrode active material has better conductivity and higher initial coulombic efficiency, reaching above 92%. Furthermore, the secondary battery can have a longer cycle life.

The negative electrode active material provided by the present application, where at least a portion of the filling material is located within the pore structure of the carbon matrix, can further reduce the volume expansion of the filling material through the carbon matrix. Comparative Example 1 used carbon-coated crystalline silicon as the negative electrode active material. Crystalline silicon has significant volume expansion, and the carbon layer on the surface provides limited protection. After multiple charging and discharging cycles, the carbon layer breaks, leading to repeated breakdown and reconstruction of the SEI film, increasing the irreversible consumption of active ions. Moreover, with an increase in the number of charging and discharging cycles, the thickness of the SEI film also increases, leading to an increase in the resistance of the secondary battery. Therefore, the cycle performance of the secondary battery prepared in Comparative Example 1 was poor.

Comparative Example 2 used natural spherical graphite as the carbon matrix. Natural spherical graphite has pore structures that can serve as a deposition substrate and has excellent conductivity. However, the pore structure of natural spherical graphite is irregular, leading to poor dispersion uniformity of the filling material. Additionally, natural spherical graphite has poor structural stability and significant volume expansion, resulting in poor cycle performance of the secondary battery and the inability to achieve a balance of high energy density, high initial coulombic efficiency, and long cycle life.

In Comparative Example 3, the temperature for graphitizing the porous biomass carbon in step 1 was higher than 2400°C, and the graphitization degree of the obtained carbon matrix was too high. At this time, the prepared negative electrode active material experienced significant volume expansion and poor structural stability during charging and discharging process, leading to poor cycle performance of the secondary battery and the inability to achieve a balance of high energy density, high initial coulombic efficiency, and long cycle life.

Comparative Example 4 directly used porous biomass carbon that had not undergone graphitization as the carbon matrix. At this time, the carbon matrix was non-graphitized carbon, which has high irreversible capacity, low initial coulombic efficiency, and poor conductivity. The negative electrode active material prepared from it has low initial coulombic efficiency and poor conductivity, which also cannot achieve a balance of high energy density, high initial coulombic efficiency, and long cycle life for the secondary battery.

It should be noted that the present application is not limited to the above-mentioned embodiments. The above-mentioned embodiments are merely examples, and within the scope of the technical solutions of the present application, embodiments that have substantially the same configuration as the technical idea and exert the same effects are included in the technical scope of the present application. In addition, without departing from the scope of the present application, various modifications conceivable by those skilled in the art can be introduced to the embodiments, and other forms constructed by combining some components in the embodiments are also included in the scope of the present application.

## Claims

1. A negative electrode active material, comprising a carbon matrix and a filling material, wherein the carbon matrix has a graphitization degree of less than or equal to 87%, optionally from 65% to 87%, and the carbon matrix comprises a plurality of pore structures, and at least a portion of the filling material is located in the pore structures of the carbon matrix, and the filling material comprises one or more of elements capable of alloying reaction with Li, and optionally the one or more of elements capable of alloying reaction with Li comprises one or more of silicon element, tin element, and germanium element.

2. The negative electrode active material according to claim 1, wherein the filling material comprises one or more of a silicon-based material, a tin-based material and a germanium-based material,
optionally, the silicon-based material comprises one or more of elemental silicon, silicon oxides, silicon-carbon materials, silicon-nitrogen composites, and silicon alloys;
optionally, the tin-based material comprises one or more of elemental tin, tin oxides, tin sulfides, tin phosphides, tin composite oxides, tin-carbon materials and tin alloy materials;
optionally, the germanium-based material comprises one or more of elemental germanium, germanium oxides, germanium-carbon materials, germanium alloy materials and germanate.

3. The negative electrode active material according to claim 1 or 2, wherein the filling material comprises a crystalline filling material and/or an amorphous filling material, optionally comprises a crystalline silicon-based material and/or an amorphous silicon-based material,
optionally, the crystalline filling material has a grain size of less than or equal to 100 nm, optionally from 2 nm to 50 nm.

4. The negative electrode active material according to any one of claims 1 to 3, wherein, the filling material comprises one or more of vapor deposited silicon-based materials, tin-based materials and germanium-based materials, and optionally comprises a vapor deposited silicon-based material.

5. The negative electrode active material according to any one of claims 1 to 4, wherein in X-ray diffraction spectrum of the negative electrode active material determined by an X-ray diffractometer, the negative electrode active material comprises a (002) crystal plane peak at 26.4° and a (111) crystal plane peak at 28.6°, and a ratio of full width at half maximum of the (002) crystal plane peak to the full width at half maximum of the (111) crystal plane peak is from 0.2 to 50, optionally from 0.2 to 20.

6. The negative electrode active material according to any one of claims 1 to 5, wherein the at least a portion of the filling material is located in the pore structures of the carbon matrix and there is a gap between the filling material and the carbon matrix.

7. The negative electrode active material according to any one of claims 1 to 6, wherein the negative electrode active material further comprises a coating layer which is located on at least part of surface of the carbon matrix,
optionally, the coating layer comprises one or more of carbon materials, conductive polymers, metal oxides and metal sulfides, more optionally comprises carbon materials;
optionally, the coating layer has a thickness of less than or equal to 100 nm, and more optionally from 10 nm to 100 nm.

8. The negative electrode active material according to any one of claims 1 to 7, wherein the negative electrode active material comprises carbon element and an element capable of alloying reaction with Li,
optionally, mass percentage of the carbon element in the negative electrode active material is from 20 wt% to 80 wt%, and more optionally from 30 wt% to 70 wt%;
optionally, mass percentage of the element capable of alloying reaction with Li in the negative electrode active material is from 20 wt% to 80 wt%, and more optionally from 30 wt% to 70 wt%.

9. The negative electrode active material of claim 8, wherein the negative electrode active material further comprises other element(s) comprising one or more of oxygen element, metal element and nitrogen element,
optionally, a sum of mass percentage of other element(s) in the negative electrode active material is less than or equal to 20 wt%, more optionally less than or equal to 10 wt%.

10. The negative electrode active material according to any one of claims 1 to 9, wherein the carbon matrix satisfies at least one of:
(1) the carbon matrix has an initial coulombic Efficiency of more than or equal to 75%, and optionally from 75% to 87%;
(2) the carbon matrix has a powder resistivity under pressure of 16 MPa of less than or equal to 5 × 10⁻² Ω·cm, optionally less than or equal to 3.5 × 10⁻² Ω·cm;
(3) the carbon matrix has a BET specific surface area of from 50 m²/g to 1000 m²/g, optional from 100 m²/g to 700 m²/g.

11. The negative electrode active material according to any one of claims 1 to 10, wherein the negative electrode active material satisfies at least one of:
(1) the negative electrode active material has a graphitization degree of more than or equal to 65%, optionally from 65% to 87%;
(2) the negative electrode active material has an initial coulombic efficiency of more than or equal to 92%, optionally from 92% to 95%;
(3) the negative electrode active material has a volume particle size Dv50 of from 3 µm to 50 µm, optionally from 5 µm to 20 µm;
(4) the negative electrode active material has a volume particle size Dv90 of less than or equal to 60 µm, optionally from 20 µm to 50 µm;
(5) the negative electrode active material has a radial distance (Dv90-Dv10)/Dv50 of from 1.0 to 3.0, optionally from 1.0 to 2.0;
(6) the negative electrode active material has a BET specific surface area of from 2 m²/g to 100 m²/g, optional from 2 m²/g to 30 m²/g.
(7) the negative electrode active material has a powder resistivity under pressure of 16 MPa of less than or equal to 5 × 10⁻¹ Ω·cm, optionally less than or equal to 2 × 10⁻¹ Ω·cm.

12. A method for preparing a negative electrode active material, comprising the following steps: Step 1, providing a carbon matrix having a graphitization degree of less than or equal to 87%, optionally from 65% to 87%, and comprising a plurality of pore structures; Step 2, dispersing a filling material into the pore structures of the carbon matrix to obtain a negative electrode active material, wherein the negative electrode active material comprises a carbon matrix and a filling material, the carbon matrix comprises a plurality of pore structures, and at least a portion of the filling material is located in the pore structures of the carbon matrix, and the filling material comprises one or more of elements capable of alloying reaction with Li, and optionally the one or more of elements capable of alloying reaction with Li comprises one or more of silicon element, tin element, and germanium element.

13. The method according to claim 12, wherein, in Step 1, the carbon matrix is prepared by placing a carbon source comprising a plurality of pore structures in a high temperature furnace, performing graphitization treatment at 1600-2400°C in a protective gas atmosphere, to obtain the carbon matrix,
optionally, heat preservation time for the graphitization treatment is from 1h to 12h;
optionally, the carbon source comprises one or more selected from hard carbon, petroleum coke, pitch coke, biomass carbon and resin carbon.

14. The method according to claim 12 or 13, wherein, in Step 1, the carbon matrix satisfies at least one of:
(1) the carbon matrix has an initial coulombic efficiency of more than or equal to 75%, and optionally from 75% to 87%;
(2) the carbon matrix has a powder resistivity under pressure of 16 MPa of less than or equal to 5 × 10⁻² Ω·cm, optionally less than or equal to 3.5 × 10⁻² Ω·cm;
(3) the carbon matrix has a BET specific surface area of from 50 m²/g to 1000 m²/g, optional from 100 m²/g to 700 m²/g;
(4) the carbon matrix has a volume particle size Dv50 of from 3 µm to 50 µm, optionally from 5 µm to 20 µm.

15. The method according to any one of claims 12 to 14, wherein, in Step 2, the process of dispersing a filling material into the pore structures of the carbon matrix comprises a liquid deposition process and a vapor deposition process, optionally a vapor deposition process,
optionally, the vapor deposition process comprises a chemical vapor deposition process and a physical vapor deposition process, more optionally a chemical vapor deposition process.

16. The method according to claim 15, wherein, in Step 2, the step of dispersing a filling material into the pore structures of the carbon matrix comprises the steps of: placing the carbon matrix in a reaction furnace, feeding a first mixture gas containing a source of elements capable of alloying reaction with Li, and depositing at a first temperature T₁ for a first time t₁, to obtain the negative electrode active material,
optionally, the first mixture gas comprises a source of elements capable of alloying reaction with Li and a protective gas, and more optionally, the source of elements capable of alloying reaction with Li has a volume percentage of from 10% to 50% in the first mixture gas;
optionally, a pressure in the reaction furnace is 200 Pa-600 Pa higher than the atmospheric pressure;
optionally, the first mixture gas has a total gas flow rate of from 0.5 L/min to 20 L/min;
optionally, the first temperature T₁ is from 400 °C to 1000 °C;
optionally, the first time t₁ is from 1h to 12h.

17. The method according to claim 16, wherein the first mixture gas further comprises a carbon source gas,
optionally, a volume ratio of the source of elements capable of alloying reaction with Li to the carbon source gas is greater than or equal to 0.5:1, optionally (2-10): 1;
optionally, the carbon source gas has a volume percentage of less than or equal to 20%, more optionally from 5% to 20%, in the first mixture gas.

18. The method according to any one of claims 12 to 17, further comprising Step 3: forming a coating layer on at least part of surface of the negative electrode active material obtained in Step 2, and the coating layer comprises one or more of carbon materials, conductive polymers, metal oxides and metal sulfides.

19. The method according to claim 18, wherein the step of forming a coating layer comprises the steps of: placing the negative electrode active material obtained in Step 2 in a reaction furnace, feeding a second mixture gas containing carbon source gas, and depositing at a second temperature T₂ for a second time t₂, to obtain a carbon-coated negative electrode active material,
optionally, the second mixture gas comprises a carbon source gas and a protective gas, and more optionally, a volume percentage V₂ of the carbon source gas in the second mixture gas is from 5% to 50%;
optionally, the second mixture gas has a total gas flow rate of form 0.5 L/min to 20 L/min;
optionally, the second temperature T₂ is from 700°C to 850°C;
optionally, the second time t₂ is from 1h to 6h.

20. A secondary battery, comprising a negative electrode plate, wherein the negative electrode plate comprises the negative electrode active material according to any one of claims 1 to 11 or the negative electrode active material prepared by the method according to any one of claims 12 to 19.

21. An electrical device, comprising the secondary battery according to claim 20.
